(19) Europäisches Patentamt
European Patent Office
Office européen des brevets

(11) **EP 3 589 600 B1**

(12) **EUROPÄISCHE PATENTSCHRIFT**

(45) Veröffentlichungstag und Bekanntmachung des Hinweises auf die Patenterteilung:
**17.11.2021 Patentblatt 2021/46**

(21) Anmeldenummer: **17787111.8**

(22) Anmeldetag: **01.09.2017**

(51) Int Cl.:
*C04B 28/00* (2006.01)     *C04B 28/06* (2006.01)
*C04B 28/26* (2006.01)     *C04B 18/02* (2006.01)
*C04B 40/00* (2006.01)     *C04B 20/10* (2006.01)
*C09K 8/00* (2006.01)     *C09K 8/03* (2006.01)

(86) Internationale Anmeldenummer:
**PCT/EP2017/072012**

(87) Internationale Veröffentlichungsnummer:
**WO 2018/157954 (07.09.2018 Gazette 2018/36)**

(54) **NEUARTIGES MATERIAL, SOWIE DESSEN HERSTELLUNG ZUR ANWENDUNG ALS SPEICHERMEDIUM IM SENSITIVEN ENERGIESPEICHERSYSTEM IM NIEDEREN, MITTLEREN UND HOCHTEMPERATURBEREICH**

NOVEL MATERIAL AND PRODUCTION THEREOF FOR USE AS A STORAGE MEDIUM IN A SENSITIVE ENERGY STORAGE SYSTEM IN THE LOW-, MEDIUM- OR HIGH-TEMPERATURE RANGE

NOUVEAU MATÉRIAU, AINSI QUE SA FABRICATION POUR UNE UTILISATION EN TANT QUE MILIEU ACCUMULATEUR DANS UN SYSTÈME SENSIBLE D'ACCUMULATION D'ÉNERGIE DANS LA PLAGE DES BASSES TEMPÉRATURES, DES TEMPÉRATURES MOYENNES ET DES HAUTES TEMPÉRATURES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2017 PCT/EP2017/054767**

(43) Veröffentlichungstag der Anmeldung:
**08.01.2020 Patentblatt 2020/02**

(73) Patentinhaber: **Fluorchemie GmbH Frankfurt 50126 Bergheim (DE)**

(72) Erfinder: **ROCKTÄSCHEL, Christian 50126 Bergheim (DE)**

(74) Vertreter: **Schäfer, Matthias W. Patentanwalt Schwanseestrasse 43 81549 München (DE)**

(56) Entgegenhaltungen:
**EP-A1- 0 794 161**

• **SGLAVO V M ET AL: "Bauxite 'red mud' in the ceramic industry. Part 1: thermal behaviour", JOURNAL OF THE EUROPEAN CERAMIC SOCI, ELSEVIER SCIENCE PUBLISHERS, BARKING, ESSEX, GB, Bd. 20, Nr. 3, 1. März 2000 (2000-03-01), Seiten 235-244, XP004185602, ISSN: 0955-2219, DOI: 10.1016/S0955-2219(99)00088-6**

• **YALCIN N ET AL: "Utilization of bauxite waste in ceramic glazes", CERAMICS INTERNATIO, ELSEVIER, AMSTERDAM, NL, Bd. 26, Nr. 5, 16. Juni 2000 (2000-06-16), Seiten 485-493, XP004209795, ISSN: 0272-8842, DOI: 10.1016/S0272-8842(99)00083-8**

**EP 3 589 600 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen modifizierten Rotschlamm bzw. einen modifizierten Bauxitrückstand, nachfolgend auch ALFERROCK® genannt, sowie Verfahren zu dessen Herstellung und dessen Verwendungen.

Mit dem Erneuerbaren Energie-Gesetz (EEG) ist in Deutschland der Ausstieg aus der Atomenergie und aus der Kohleverstromung bis 2038 festgelegt. Als Ersatz sollen Windparks, Solaranlagen und Biogas-Anlagen die Stromversorgung für Deutschland darstellen.

Insbesondere Windparks und Solaranlagen haben aber den Nachteil, dass bei Windstille und bei Dunkelheit kein Strom erzeugt wird. Damit sind diese erneuerbaren Energien nicht grundlastfähig für Abnehmer, insbesondere industrielle Abnehmer, die auf eine gleichmäßige Energieversorgung angewiesen sind.

Um diesem systemischen Nachteil zu entgehen, müssen Energieerzeugung und Energieabnahme entkoppelt werden. Nur Energiespeichern, die zwischen die Energieerzeuger und die Energieabnehmer geschaltet werden, gelingt es, den Energiefluss in notwendiger Weise zu vergleichmäßigen und damit die erneuerbaren Energien grundlastfähig zu machen.

Es besteht daher ein Bedarf an Energiespeichern und hierfür geeigneten Speichermedien, die diese Nachteile bei der Energiegewinnung aus erneuerbaren Energiequellen lösen können und die zudem selbst ressourcensparend und kostengünstig gewonnen werden können.

Es ist bekannt, dass Rotschlamm beim Bayer-Verfahren zur Gewinnung von Aluminiumhydroxid (ATH) aus Bauxit als Abfallprodukt anfällt. Unter Rotschlamm (RS) wird im Folgenden der beim Bayer- Verfahren entstandene Rückstand verstanden, der bei der Gewinnung von ATH aus Bauxit anfällt. Ein großer Teil des bei der Aluminiumgewinnung anfallenden Bauxitrückstands bzw. Rotschlamms wird nicht weiterverarbeitet und einer wirtschaftlichen Verwendung zugeführt, sondern auf Deponien entsorgt.

Aus dem Stand der Technik ist bereits bekannt, dass Bauxitrückstand aufgrund seiner großen inneren Oberfläche als Adsorbens geeignet ist.

Weiterhin ist bekannt, dass modifizierter Bauxitrückstand aufgrund seiner chemischen Zusammensetzung als anorganisches, halogenfreies Flammschutzmittel eingesetzt werden kann in Kunststoffen aller Art, die als Compound oder auch in verschäumter Version zur Verfügung stehen (WO 2012/126487 A1).

Weiterhin ist bekannt, dass modifizierter Bauxitrückstand über eine hohe Dichte verfügt, so dass diese Zusammensetzung auch als Schallschutzmittel oder zur Bohrschlammbeschwerung oder zur Strahlenabweisung Einsatz finden kann (WO 2014/114283 A1).

Ferner ist aus der WO 2005/061408 A1 ein poröses, partikuläres Material mit Bauxitrückstand zur Fluidbehandlung und Schadstoffentfernung bekannt. Zu den Schadstoffen gehören z. B. Schwermetalle, Anionen und Gase.

Bei Experimenten mit modifiziertem, chromatarmen Bauxitrückstand, der auf Temperaturen zwischen 120°C und 250° C erhitzt worden war, haben die vorliegenden Erfinder überraschenderweise festgestellt, dass die Abkühlung unerwartet langsam erfolgte. Angesichts dieser Beobachtung haben die Erfinder der vorliegenden Erfindung umfangreiche Untersuchungen durchgeführt zum Verhalten von (optional chromatarmem) Bauxitrückstand bzw. Rotschlamm, wenn er einer thermischen Behandlung unterzogen wird, und dabei vergleichend die chemischen, mineralogischen, physikalischen und mechanischen Parameter, insbesondere die thermischen Parameter, beobachtet. Die Erfinder gelangten so zu einem neuartig modifizierten Rotschlamm, der als Speichermedium, insbesondere als Wärmespeicher, eingesetzt werden kann.

Die thermische Behandlung beeinflusst die genannten Parameter in entscheidender Form und nimmt damit wesentlichen Einfluss auf die Eigenschaften des Wärmespeichers insgesamt, wobei insbesondere sein Verhalten bei zyklischer Wärmebeaufschlagung (Thermozyklenbeständigkeit, Thermoschockbeständigkeit) wichtig ist. Aufgrund der chemischen Zusammensetzung des als Ausgangsmaterial eingesetzten Rotschlamms und der Temperaturbereiche, die bei der thermischen Behandlung durchlaufen werden, können jeweils unterschiedliche chemischmineralogische Spezies entstehen, die wiederum unterschiedliche chemische, physikalische, mineralogische, mechanische und thermische Eigenschaften haben. Die Summe dieser Eigenschaften bestimmen die Eigenschaften des Speichermechanismus. Damit gelingt es, die Eigenschaften des Speichermechanismus in gewillkürter Form, d. h. gezielt zu beeinflussen. Zu den wichtigsten Eigenschaften zählen beispielsweise

-   Wärmekapazität
-   Wärmeleitfähigkeit
-   Elektrische Leitfähigkeit
-   Dichte
-   Härte
-   Zähigkeit
-   Porosität
-   Thermoschockbeständigkeit

- Thermozyklenbeständigkeit
- Thermische Ausdehnungskoeffizienten
- Chemische Stabilität, u. a.

Die vorliegende Erfindung betrifft daher einen modifizierten Rotschlamm, wie er in Anspruch 1 definiert ist, ein Verfahren zur Herstellung eines modifizierten Rotschlamms mit den Merkmalen von Anspruch 5, ein Speichermedium, umfassend einen modifizierten Rotschlamm, einen Wärmespeicher, umfassend ein Speichermedium, und zahlreiche Verwendungen eines modifizierten Rotschlamms als ein Speichermedium, insbesondere in einem Wärmespeicher sowie die Methoden einer optimalen Anwendung.

In einer Ausführungsform enthält ein modifizierter Rotschlamm die folgenden Komponenten:

- Hämatit ($Fe_2O_3$),
- Korund ($Al_2O_3$),
- Rutil ($TiO_2$) und/oder Anatas ($TiO_2$),
- Quarz ($SiO_2$),
- optional Perowskit ($CaTiO_3$) und
- optional Pseudobrookit ($(Fe^{3+},Fe^{2+})_2(Ti,Fe^{3+})O_5$), Nephelin ($(Na,K)[AlSiO_4]$) und/oder Hauynit ($(Na,Ca)_{4-8}[Al_6Si_6O_{24}(SO_4)]$).

Der modifizierte Rotschlamm enthält dabei weniger als 0,5 Gew % $Na_2O$ und weniger als 0,5 Gew% Glas. wie zum Beispiel Natron-Glas und/oder Kali-Natron-Glas. Vorzugsweise ist der modifizierte Rotschlamm ebenfalls im Wesentlichen frei von $K_2O$ und/oder $CaO$ und/oder weiteren sonstigen Alkali- und Erdalkalioxiden.

Rotschlamm ist der unlösliche Anteil, der nach der alkalischen Auslaugung von Aluminium aus Bauxit zurückbleibt. Rotschlamm wird im alkalischen Milieu auf Deponien verspült. Rotschlamm enthält damit Alkali in undefinierter Menge in Form freier Natronlauge oder in Form von Natriumcarbonat, das durch Karbonisierung mit CO2 entsteht. Da dieser freie Alkaligehalt aktiv, aber undefiniert, in die Bildung der mineralogischen Phasen eingreift, muss - um definierte und steuerbare Verhältnisse zu schaffen - dieser Alkaligehalt, d. h. Na2O aber auch K2O und der Erdalkaligehalt, d. h. CaO und MgO durch Waschen oder Neutralisation mindestens überwiegend, besser komplett entfernt werden. Der modifizierte Rotschlamm ist damit im Wesentlichen frei von Na2O und K2O; Natronglas und/oder Kaliglas kann sich beim Tempern somit nicht bilden.

Unter "im Wesentlichen frei" im Sinne der vorliegenden Anmeldung wird ein Gehalt von weniger als 0,5 Gew-%, insbesondere weniger als 0,2 Gew-%, insbesondere weniger als 0,1 Gew-%, insbesondere weniger als 0,05 Gew-%, insbesondere weniger als 0,03 Gew-%, insbesondere weniger als 0,01 Gew-%, verstanden.

Der modifizierte Rotschlamm kann somit insbesondere die Komponenten (kristallines) Hämatit ($Fe_2O_3$), Korund ($Al_2O_3$), Rutil ($TiO_2$) und/oder Anatas ($TiO_2$) und Quarz ($SiO_2$) enthalten oder im Wesentlichen aus Ihnen bestehen. Weitere Bestandteile können, müssen aber nicht enthalten sein. Als solche weiteren (optionalen) Bestandteile können insbesondere Perowskit ($CaTiO_3$), Pseudobrookit ($(Fe^{3+},Fe^{2+})_2(Ti,Fe^{3+})O_5$), Nephelin ($(Na,K)[AlSiO_4]$) und/oder Hauynit ($(Na,Ca)_{4-8}[Al_6Si_6O_{24}(SO_4)]$) genannt werden, die allesamt in kristalliner Form vorliegen können. Der modifizierte Rotschlamm enthält dabei aber im Wesentlichen kein $Na_2O$ (ebenso $K_2O$ und $CaO$) und im Wesentlichen kein Glas.

In einer Ausführungsform kann der modifizierte Rotschlamm

- 48 bis 55 Gew.-%, insbesondere 49 bis 54 Gew.-%, insbesondere 50 bis 53 Gew.-%, Hämatit ($Fe_2O_3$),
- 13 bis 18 Gew.-%, insbesondere 14 bis 17 Gew.-%, insbesondere 15 bis 16 Gew.-%, Korund ($Al_2O_3$),
- 8 bis 12 Gew.-%, insbesondere 9 bis 11 Gew.-%, Rutil ($TiO_2$) und/oder Anatas, ($TiO_2$),
- 2 bis 5 Gew.-%, insbesondere 3 bis 4 Gew.-%, Quarz ($SiO_2$), und
- weniger als 0,03 Gew.-%, insbesondere weniger als 0,01 Gew.-%, $Na_2O$ und weniger als 0,1 Gew.-%, insbesondere weniger als 0,05 Gew.%, Glas enthalten.

In einer Ausführungsform ist ein modifizierter Rotschlamm erhältlich durch Erhitzen von im Wesentlichen $Na_2O$-frei gewaschenem (bzw. neutralisiertem) Rotschlamm mit einer mineralischen Zusammensetzung von

- 10 bis 55, insbesondere 10 bis 50, Gewichtsprozent Eisenverbindungen,
- 12 bis 35 Gewichtsprozent Aluminiumverbindungen,
- 3 bis 17, insbesondere 5 bis 17, Gewichtsprozent Siliziumverbindungen,
- 2 bis 12, insbesondere 2 bis 10, Gewichtsprozent Titandioxid,
- 0,5 bis 6 Gewichtsprozent Calciumverbindungen und
- gegebenenfalls weitere unvermeidbare Verunreinigungen,

auf eine Temperatur von mindestens 800°C, insbesondere mindestens 850 °C, insbesondere mindestens 900 °C, insbesondere mindestens 950 °C, vorzugsweise mindestens 1000 °C, wie zum Beispiel in einem Bereich zwischen 1100 und 1200 °C, wie etwa 1150°C. Ein so erhältlicher modifizierter Rotschlamm kann auch als ein getemperter bzw. gesinterter Rotschlamm bzw. als eine Hämatit-Keramik bezeichnet werden.

Rotschlamm, wie er nach der alkalischen Auslaugung von Aluminium aus Bauxit als unlöslicher Anteil zurückbleibt, enthält üblicherweise signifikante Mengen an $Na_2O$ bzw. sonstigen Alkali- und Erdalkalioxiden, die auch als Hydroxide oder als Carbonate vorliegen können. Beim Erhitzen von solch einem (ungewaschenen) Rotschlamm auf Temperaturen über 800°C, insbesondere über 1000°C, bewirken diese alkalischen Bestandteile, dass sich ebenfalls in Rotschlamm enthaltenes (kristallines) $SiO_2$ in Glas, wie zum Beispiel Natron-Glas und/oder Kali-Natron-Glas, umwandelt, was ein schlechter Wärmeleiter, wenn nicht gar ein Wärmeisolator, ist und somit dem Verwendungszweck des erfindungsgemäßen modifizierten Rotschlamms zum Speichern von Wärme aus Strom (KW-Kopplung) bzw. zur Umwandlung von Wärme in Strom (WK-Kopplung), massiv abträglich ist bzw. sogar diametral entgegenwirkt. Auch weitere erfindungsgemäß unerwünschte Stoffe können sich beim Erhitzen von ungewaschenem Rotschlamm auf Grund der hohen Reaktivität der Alkali- und Erdalkalioxide und dergleichen bilden. Darüber hinaus ist die Anwesenheit von solch reaktiven Stoffen im erfindungsgemäßen modifizierten Rotschlamm auch für dessen Verwendungszweck in einem Wärmespeicher, der ein ständiges Erwärmen und Abkühlen des modifizierten Rotschlamms im Wärmespeicher mit sich bringt, abträglich, da eine chemische Stabilität des modifizierten Rotschlamms (d.h. keine chemischen Reaktionen während des wiederholten Aufheizens und Abkühlens im gewählten Arbeitstemperaturbereich von Raumtemperatur bis ca. 1000°C) und eine physikalische Stabilität (unterschiedliche thermische Ausdehnung, bzw. Schrumpfung der vorhandenen mineralischen Phasen mit Auswirkung auf die Thermoschockbeständigkeit und Thermozyklenbeständigkeit) für die Lebensdauer des erfindungsgemäßen Wärmespeichers maßgeblich ist.

Es ist daher erfindungsgemäß erforderlich, den Rotschlamm vor dem Erhitzen zu waschen, so dass er im Wesentlichen frei von $Na_2O$ (und sonstigen Alkali- und Erdalkalioxiden, wie $K_2O$ und/oder $CaO$) ist und vorzugsweise auch frei von organischen Bestandteilen ist, die beim Erhitzen reduzierend wirken können. Da $Na_2O$, wie auch die sonstigen Alkali- und Erdalkalioxide, alkalische (d.h. basische) Substanzen sind, kann das im Wesentlichen $Na_2O$-frei Waschen auch als ein Neutralisieren bezeichnet werden bzw. ein entsprechend gewaschener Rotschlamm als neutralisierter Rotschlamm bezeichnet werden. Zweckmäßig erfolgt das Waschen mittels Wasser, dem in vorteilhafter Weise eine Säure bzw. eine saure Substanz, wie Eisen(II)chlorid, zugegeben sein kann.

In einer Ausführungsform kann der modifizierte Rotschlamm (nach Tempern) im Wesentlichen frei von einem, zwei, drei oder allen vier der folgenden Komponenten sein:

- Gibbsit ($Al(OH)_3$),
- Goethit ($FeO(OH)$),
- Boehmit ($AlO(OH)$),
- Cancrinit ($Na_6Ca_2[(CO_3)_2|Al_6Si_6O_{24}]$).

In einer Ausführungsform kann der modifizierte Rotschlamm im Wesentlichen frei von einem, zwei, drei, vier oder allen fünf der folgenden Komponenten sein:

- Aluminiumtitanat ($Al_2TiO_5$),
- (elementares) Eisen ($Fe$),
- Mayenit ($Ca_{12}Al_{14}O_{33}$),
- Ulvospinell ($Fe_2TiO_4$),
- Andradit ($Ca_3Fe_2(SO_4)_3$).

Diese unerwünschten Komponenten können entstehen, wenn der Rotschlamm nicht ausreichend und sorgfältig gewaschen wurde, unter anderem auch von organischen Bestandteilen befreit wurde, und/oder in einer reduzierenden Atmosphäre erhitzt bzw. gesintert wurde.

Das Erhitzen kann bei der angegebenen Temperatur insbesondere über einen Zeitraum von 5 Minuten bis 36 Stunden, insbesondere 5 Minuten bis 24 Stunden, insbesondere 5 Minuten bis 12 Stunden, insbesondere 5 Minuten bis 6 Stunden, insbesondere 5 Minuten bis 2 Stunden, insbesondere 5 Minuten bis 1 Stunde, insbesondere 5 Minuten bis 30 Minuten, erfolgen.

In einer Ausführungsform kann der modifizierte Rotschlamm eine Porosität von weniger als 15 %, insbesondere im Bereich von 5 bis 12 %, haben. Die Porengrößen sind dabei klein. Solch eine vergleichsweise niedrige Porosität ist aufgrund der erfindungsgemäßen Modifikation des Rotschlamms ohne weiteres erreichbar und ist besonders geeignet zur Erzielung einer für den Verwendungszweck des erfindungsgemäßen modifizierten Rotschlamms vorteilhaften hohen Wärmekapazität und für anorganische Substanzen typischen Wärmeleitfähigkeit (aufgrund der durch die vergleichsweise niedrige Porosität geringen Phononenstreuung an Grenzflächen). Die Porosität kann insbesondere bestimmt werden mittels Gasadsorptionsisothermen nach der BJH-Methode.

In einer Ausführungsform kann der modifizierte Rotschlamm eine Dichte im Bereich von 3,90 bis 4,0 g/cm$^3$, insbesondere von 3,91 bis 3,95 g/cm$^3$, insbesondere von 3,92 bis 3,94 g/cm$^3$, insbesondere von etwa 3,93 g/cm$^3$, haben. Solch eine vergleichsweise hohe Dichte ist ebenfalls aufgrund der erfindungsgemäßen Modifikation des Rotschlamms ohne weiteres erreichbar und ist besonders geeignet zur Erzielung einer für den Verwendungszweck des erfindungsgemäßen modifizierten Rotschlamms vorteilhaften hohen Wärmekapazität und typischen Wärmeleitfähigkeit.

In einer Ausführungsform kann der modifizierte Rotschlamm eine mittlere Partikelgröße d50 im Bereich von 3 bis 10 $\mu$m, insbesondere von 5 bis 8 $\mu$m, haben. Die mittlere Partikelgröße d50 kann insbesondere bestimmt werden mittels Laserbeugung respektive Laserbeugung (MALVERN) gemäß ISO 13320 (2009).

In einer Ausführungsform kann der modifizierte Rotschlamm eine Partikelgröße d10 im Bereich von 0,5 bis 2,5 $\mu$m, insbesondere von 1,0 bis 2,0 $\mu$m, und/oder eine Partikelgröße d90 im Bereich von 15 bis 50 $\mu$m, insbesondere von 20 bis 40 $\mu$m, haben. Die Partikelgröße d10 sowie die Partikelgröße d90 kann insbesondere bestimmt werden mittels Laserbeugung respektive Laserbeugung (MALVERN) gemäß ISO 13320 (2009).

In einer Ausführungsform kann der modifizierte Rotschlamm eine spezifische Wärmekapazität bei 20 °C im Bereich von 0,6 bis 0,8 kJ/(kg*K), insbesondere von 0,65 bis 0,75 kJ/(kg*K), und/oder eine spezifische Wärmekapazität bei 726,8 °C im Bereich von 0,9 bis 1,3 kJ/(kg*K), insbesondere von 0,95 bis 1,2 kJ/(kg*K), haben. Die spezifische Wärmekapazität kann insbesondere bestimmt werden gemäß DIN EN ISO 11357-4.

In einer Ausführungsform kann der modifizierte Rotschlamm eine spezifische Wärmeleitfähigkeit im Bereich von 3 bis 35 W/(m*K), insbesondere von 5 bis 20 W/(m*K), insbesondere von 8 bis 12 W/(m*K), haben. Die spezifische Wärmeleitfähigkeit kann insbesondere bestimmt werden über plattenförmige Testkörper im Lambda-Meter gemäß DIN ISO 8302.

In einer Ausführungsform kann der modifizierte Rotschlamm in Form eines verpressten Feststoffs vorliegen.

Das Verfahren zur Herstellung eines modifizierten Rotschlamms umfasst ein Waschen und Trocknen von Rotschlamm mit einer mineralischen Zusammensetzung von

- 10 bis 55, insbesondere 10 bis 50, Gewichtsprozent Eisenverbindungen,
- 12 bis 35 Gewichtsprozent Aluminiumverbindungen,
- 3 bis 17, insbesondere 5 bis 17, Gewichtsprozent Siliziumverbindungen,
- 2 bis 12, insbesondere 2 bis 10, Gewichtsprozent Titandioxid,
- 0,5 bis 6 Gewichtsprozent Calciumverbindungen und
- gegebenenfalls weitere unvermeidbare Verunreinigungen,

so dass der gewaschene Rotschlamm weniger als 0,5 Gew.-% $Na_2O$ enthält, und
anschließend ein Erhitzen des gewaschenen (neutralisierten) Rotschlamms auf eine Temperatur von mindestens 800°C, insbesondere mindestens 850 °C, insbesondere mindestens 900 °C, insbesondere mindestens 950 °C, vorzugsweise mindestens 1000 °C, wie zum Beispiel in einem Bereich zwischen 1100 und 1200 °C, wie etwa 1150°C.

Das Waschen des Rotschlamms dient insbesondere dazu, dass der zu erhitzende Rotschlamm aus den oben diskutierten Gründen im Wesentlichen frei von $Na_2O$ (und sonstigen Alkali- und Erdalkalioxiden, wie $K_2O$ und/oder $CaO$) ist und vorzugsweise auch frei von organischen Bestandteilen ist, die beim Erhitzen reduzierend wirken können. Hierzu kann das Waschen insbesondere mittels Wasser erfolgen, dem in vorteilhafter Weise eine Säure bzw. eine saure Substanz, wie Eisen(II)chlorid, zugegeben sein kann.

In einer Ausführungsform kann das Erhitzen bei der angegebenen Temperatur insbesondere über einen Zeitraum von 5 Minuten bis 36 Stunden, insbesondere 5 Minuten bis 24 Stunden, insbesondere 5 Minuten bis 12 Stunden, insbesondere 5 Minuten bis 6 Stunden, insbesondere 5 Minuten bis 2 Stunden, insbesondere 5 Minuten bis 1 Stunde, insbesondere 5 Minuten bis 30 Minuten, erfolgen.

In einer Ausführungsform kann das Erhitzen des gewaschenen und getrockneten Rotschlamms in einer nicht-reduzierenden (neutralen) (Gas-)Atmosphäre durchgeführt werden. Hierdurch kann eine (unerwünschte) Reduktion von Komponenten im Rotschlamm, insbesondere von Eisenverbindungen, vermieden werden.

In einer Ausführungsform wird der Rotschlamm nur einmal (d.h. nicht mehrmals) erhitzt. Ein mehrmaliges Erhitzen des Rotschlamms, wie zum Beispiel ein Vorsintern, ist bei dem erfindungsgemäßen Verfahren in der Regel nicht erforderlich, so dass vorteilhafterweise auf diesen (erfindungsgemäß unnötigen) zusätzlichen Verfahrensschritt verzichtet werden kann.

In einer Ausführungsform kann das Verfahren ferner ein vorgeschaltetes Granulieren des (gesinterten bzw. getemperten) Rotschlamms nach dem Erhitzen und anschließend ein Verpressen des granulierten Rotschlamms bzw. des Granulats umfassen. Eine Granulierung des getemperten Rotschlamms erleichtert (oder ermöglicht sogar erst) ein Verpressen innerhalb eines sehr eng einzustellenden Feuchtebereichs.

In einer Ausführungsform kann bei dem Verfahren zur Herstellung eines modifizierten Rotschlamms ein erfindungsgemäßer modifizierter Rotschlamm hergestellt werden.

Das Speichermedium umfasst einen erfindungsgemäßen modifizierten Rotschlamm. Unter einem "Speichermedium" im Sinne der vorliegenden Anmeldung wird insbesondere das aktive (bzw. tatsächliche) speichernde Material verstanden. Zum Beispiel ist im Falle eines Wärmespeichers das Speichermedium ein wärmespeicherndes Material, das eine entsprechende (bzw. geeignete) Wärmekapazität und Wärmeleitfähigkeit aufweisen muss.

Das Speichermedium kann neben dem modifizierten Rotschlamm ggf. weitere Komponenten enthalten.

In einer Ausführungsform kann das Speichermedium ferner eine oder mehrere der folgenden Komponenten umfassen:

- ein Mittel zur Vermeidung von Lufteinschluss (Luftabsorption im Inneren des Speichermediums) und/oder Luftadsorption (Anlagerung von Luft an der Oberfläche). (Beispielsweise kann die Matrix für den Strom-Wärme-Speicher mittels eines Doppelschneckenextruders unter Zusatz von 5 bis 10 Gewichts% Polydimethysiloxan oder Polydiphenylsiloxan Polymer und unter gleichzeitiger Verwendung einer Vakuum-Entgasung mit maximaler Leistung (z.B. hintereinandergeschaltete Drehschieber-Vakuumpumpen) so behandelt werden, dass durch die intensive Dispergierung im Polysiloxansystem alle Lufteinschlüsse beseitigt werden. Die erhaltene Masse ist knetbar).
- ein Mittel zur Verbesserung der Wärmeleitfähigkeit, insbesondere ausgewählt aus der Gruppe, bestehend aus Metallkolloiden, Metallpulvern, Graphit und Silicium-haltigen Substanzen,
- ein Mittel zur Bildung einer thixotropen Zusammensetzung (Insbesondere durch Zusatz von Polypentaerythrit und einer Karbonsäure ( C18 bspw.) zur Wärmeträger-Matrix vor der Behandlung im Doppelschneckenextruder kann diese beispielsweise in einem erweiterten Bereich thixotrop eingestellt werden. Im Aktivierungsprozess des Strom-Wärmespeichers, d.h. langsames Aufheizen, können neben dem Polysiloxan auch diese Agenzien thermisch zu Kohlenstoff zersetzt werden, wobei der entstehende Kohlenstoff keine negativen Auswirkungen auf die erwünschten Eigenschaften des Strom-Wärme-Speichers hat, sondern die Wärmeleitfähigkeit verbessert).

In einer Ausführungsform kann das Speichermedium im Wesentlichen frei von Weichmachern ("plastisizer") sein. Weichmacher sind bei dem erfindungsgemäßen Rotschlamm in der Regel nicht erforderlich, so dass vorteilhafterweise auf diese (erfindungsgemäß unnötigen) Weichmacher verzichtet werden kann.

Der Wärmespeicher umfasst ein erfindungsgemäßes Speichermedium. Unter einem "Wärmespeicher" im Sinne der vorliegenden Anmeldung wird insbesondere eine Vorrichtung verstanden, die als aktives wärmespeicherndes Material das Speichermedium enthält und daneben ggf. noch weitere apparative Elemente aufweist.

In einer Ausführungsform kann der Wärmespeicher ein Strom-Wärme-Speicher sein. Unter einem "Strom-Wärme-Speicher" im Sinne der vorliegenden Anmeldung kann insbesondere eine Speichervorrichtung verstanden werden, die elektrische Energie in thermische Energie (Wärmeenergie) umwandeln kann und/oder die thermische Energie (Wärmeenergie) in elektrische Energie umwandeln kann, insbesondere die sowohl elektrische Energie in thermische Energie als auch thermische Energie in elektrische Energie umwandeln kann.

In einer Ausführungsform kann der Wärmespeicher ferner Vorrichtungen zum Beladen und Entladen des Wärmespeichers umfassen. Vorrichtungen zum Beladen und Entladen des Wärmespeichers können beispielsweise mechanische Bauelemente, und/oder andere Bauelemente, wie zum Beispiel leitfähige Kontakte bzw. Anschlüsse, insbesondere elektrisch leitfähige Kontakte bzw. Anschlüsse und/oder wärmeleitende Kontakte bzw. Anschlüsse, enthalten.

In einer Ausführungsform kann der Wärmespeicher ein Strom-Wärme-Speicher sein, der ferner Mittel zum Umwandeln von Strom in Wärme wie Heizkerzen oder Widerstands- bzw. Heizdrähte, umfasst. Hierdurch kann eine Umwandlung von elektrischer Energie in thermische Energie möglich sein. Diese Mittel können dabei in mittelbarem oder unmittelbarem Kontakt mit dem Speichermedium , zum Beispiel darin eingebettet sein.

In einer Ausführungsphase kann der Wärmespeicher ein Wärme-Strom-Speicher sein, der Mittel zur Umwandlung von Wärme in Strom wie Einrichtungen zur Erzeugung von Dampf oder heißer Luft, Turbinen und Generatoren umfasst. Hierdurch wird eine Umwandlung von Wärme in Strom möglich sein.

Der erfindungsgemäße Wärmespeicher kann sowohl zur Kraft-Wärme-Kopplung (KW-Kopplung) als auch zur Kraft-Wärme-Kraft-Kopplung (KWK-Kopplung) konfiguriert sein. In anderen Worten kann der erfindungsgemäße Wärmespeicher für eine Kraft-Wärme-Kopplung (bzw. Strom(kraft)Wärme-Kopplung) als auch für eine Kraft-Wärme-Kraft-Kopplung (bzw. Strom (Kraft) - Wärme - Strom (Kraft) - Kopplung) verwendet werden. Sämtliche hierfür notwendigen Eigenschaften und Charakteristika, wie Dichte $\rho$, spezifische Wärmeleitfähigkeit Cp, Arbeitstemperaturintervall $\Delta T$, Wärmeleitvermögen innerhalb der Substanz $\lambda$, intrinsische Weiterleitungsfähigkeit der thermischen Energie im Speicher (thermal diffusivity), Porosität, Korn- bzw. Partikelgrößenverteilung, Härte und gleichzeitig hohe Zähigkeit, sowie chemische Stabilität, können durch den erfindungsgemäßen modifizierten Rotschlamm auf Grund seiner chemischen Zusammensetzung bzw. seiner herstellungsbedingten Modifizierung erfüllt werden.

Die Wirkungsweise des Wärmespeichers kann also in zwei Schritte zerlegt werden:

1. Schritt: Kraft Wärme (KW) - Kopplung,
2. Schritt: Wärme Kraft (WK) - Kopplung.

Beide Schritte können jeweils eigenständig oder in Kombination Als Kraft Wärme Kraft-Kopplung zum Einsatz kommen.

Die Kraft Wärme-Kopplung arbeitet mit einem Wirkungsgrad von 95 - 100%. Der erfindungsgemäße Wärmespeicher ist damit ein ideales Medium um Wärme auf Systeme zu übertragen, die Wärme benötigen, er ist mit anderen Worten ein Wärmetransmitter idealer Art. Dazu gehören z. B. Gebäude (Fußboden- und Wandheizungen), weiterhin technische Apparate aller Art wie Kessel, Drehrohröfen, Destillationseinrichtungen, Rohrleitungen, Kaffeemaschienen und vieles mehr,

Die Wärmeübertragung (Kraft Wärme-Kopplung) auf alle Systeme dieser Art ist von höchster Atraktivität, da eine Methode mit einem Wirkungsgrad von 95 - 100 % zur Anwendung kommt. Die aktuell eingesetzten Systeme zur Wärmeübertragung arbeiten mit einem Wirkungsgrad von üblicher Weise 25 - 35 %. Die Kraft Wärme Wärme-Kopplung reduziert also den Energiebedarf und damit die Energiekosten auf ca. 1/3. Damit können gewaltige Mengen an CO2 aus der Verbrennung fossiler Energieträger eingespart werden im Weltmaßstab. Die Wärmespeicher für eine Kraft Wärme-Kopplung können so ausgeführt werden, dass bis auf die Wärmeübertragungsseite alle anderen Flächen thermisch isoliert sind. Das gilt für Räume wie für die Metallflächen technischer Apparate aller Art.

Die Erfindung betrifft ferner die Verwendung eines erfindungsgemäßen modifizierten Rotschlamms als ein Speichermedium, insbesondere in einem Wärmespeicher.

In einer Ausführungsform kann der modifizierte Rotschlamm zur Speicherung von Wärme bei einer Temperatur bis zu 1000 °C, insbesondere bei einer Temperatur von größer 100 °C bis zu 1000 °C verwendet werden. Es ist aber auch eine Verwendung zur Speicherung von Wärme bei einer Temperatur von größer 80 °C, insbesondere größer 90 °C möglich.

In einer Ausführungsform kann der modifizierte Rotschlamm als ein gleichzeitig aufheizbares und abkühlbares Speichermedium verwendet werden. Hierdurch wird quasi eine Regelung zur Verfügung gestellt, durch die beispielsweise erreicht werden kann, dass das Speichermedium im Betrieb nicht über 500°C erhitzt wird, wodurch eine Inversion von (trigonalem) $\alpha$-Quarz zu (hexagonalem) ß-Quarz vermieden werden kann. D.h., einer Erwärmung des Speichermediums über einen vorbestimmten Schwellenwert, wie beispielsweise 500 °C, wird durch gleichzeitige Abgabe einer entsprechenden Wärmemenge an ein anderes Medium und dadurch entsprechendes Abkühlen entgegengewirkt.

Dieser Tatbestand stellt eine revolutionäre Weiterentwicklung der bisherigen Speichertechnologien dar. Bisher konnten alle Speicher entweder beladen oder entladen werden (nacheinander) wie z. B. Batterien oder Pumpspeicherwerke oder Kraft-Wärmespeicher, bei denen zunächst mittels Strom heiße Luft erzeugt wird, die dann Steine aufheizt (Beladevorgang). Die heißen Steine heizen im 2. Schritt (Entladevorgang) kalte Luft zu heißer Luft auf, die dann aus Wasser Dampf macht zum Antreiben von Turbinen und Generatoren. Sowohl beim Ladevorgang wie beim Entladevorgang werden Temperaturintervalle von ca. 100° C bis z. B. 1000° C oder Teile davon durchschritten.

Wesentliches Problem in dem beschrieben 2-Schritt-Verfahren ist das kubische Ausdehnungs-, bzw. Schrumpfvermögen der in der Speichersubstanz enthaltenen kristallinen Substanzen in den beim Beladen und Entladen durchlaufenen Temperaturintervallen. Da alle enthaltenen Substanzen unterschiedliche Ausdehnungskoeffizienten im jeweiligen Temperaturintervall haben, wird die Substanz (z. B. Natursteine) systematisch zerbrochen und damit zerstört, d. H. die Thermoschockbeständigkeit und die Thermozyklenbeständigkeit sind nicht im notwendigen Maße gegeben.

Kann gleichzeitig be- und entladen werden, ist es nicht mehr notwendig, größere Temperaturintervalle zu durchlaufen. Das Betreiben des Speichers kann jetzt bei einer gewillkürten und gewünschten Temperatur, bzw. innerhalb eines schmalen Temperaturbands erfolgen. Die beim Beladevorgang zugeführte Energie wird in gleichem Maße beim Entladevorgang wieder abgeführt. Mit anderen Worten: bei annähernd konstanter Temperatur bleibt der Ausdehnungskoeffizient stabil und verändert sich nicht. Damit entfällt die zerstörerische Kraft des sich bei jeder enthaltenen Substanz spezifisch verändernden Ausdehnungskoeffizienten. Die Thermoschockbeständigkeit und die Thermozyklenbeständigkeit sind vorhanden, d. h. der Wärmespeicher kann langfristig betrieben werden. Überschreitet man beispielsweise 500° C nicht, finden keine Zersetzungen außer denjenigen von Hydroxiden, Oxidhydraten und Carbonaten statt, auch keine Sinterprozesse etc. Die Speichersubstanz bleibt in allen Parametern stabil, Veränderungen wie Zersetzungen, Phasenumwandlungen, Sinterungen entfallen. Der Ausschluss von freier Natronlauge bzw. von durch Carbonisierung daraus entstandenen Natriumcarbonats verhindert eine Einflussnahme der Alkali- bzw. Erdalkalioxide auf die Bildung von chemisch-mineralogischer Spezies in den durchlaufenen Temperaturbereichen. Nur so können klar definierte Substanzen gebildet werden mit in jeder Hinsicht definierten Parametern. Beispielsweise sind in der erfindungsgemäßen Speichersubstanz nur folgende Stoffe enthalten: Hämatit, alpha-Al2O3, Anatas, Rutil, Perowskit, Cancrinit und Quarz.

Muss beim Anfall von Spitzenstrommengen, die gespeichert werden sollen, der Arbeits-Temperaturbereich des Speichers z. B. auf 1000° C erweitert werden, verändern sich die chemisch-mineralogischen Bestandteile des Speichermaterials (vgl. Tabelle 1 "Mineralphasen Bauxitrückstand"), die Thermozyklenbeständigkeit und die Thermoschockbeständigkeit bleiben dennoch erhalten, da der Be- und Entladevorgang bei einer Temperatur bzw. in einem engen Temperaturband stattfinden, d. h. die Ausdehnungskoeffizientbedingte Selbstzerstörung des Speichers kann nicht stattfinden.

In einer Ausführungsform kann der modifizierte Rotschlamm als ein Speichermedium in einem Strom-Wärme-Speicher verwendet werden.

In einer Ausführungsform kann das Speichermedium mittels elektrischem Strom aufgeheizt werden und/oder unter Erzeugung von elektrischem Strom abgekühlt werden.

In einer Ausführungsform kann der modifizierte Rotschlamm zur Speicherung von aus erneuerbaren Energiequellen gewonnenem elektrischen Strom verwendet werden. Unter "erneuerbaren Energiequellen" im Sinne der vorliegenden Anmeldung können insbesondere Windkraft, Wasserkraft, Gezeitenkraft, Sonnenenergie (Solarenergie), Geothermie und Biomasse verstanden werden, vorzugsweise aber erneuerbare Energiequellen, deren zeitliche Entstehung dem menschlichen Einfluss weitestgehend entzogen ist und bei denen somit eine effektive Speichermöglichkeit von großer Bedeutung ist, wie insbesondere Windkraft, Gezeitenkraft und Sonnenenergie (Solarenergie).

In einer Ausführungsform kann der Strom-Wärme-Speicher Widerstandsdrähte umfassen, die durch elektrischen Strom aufgeheizt werden und so das Speichermedium aufheizen.

In einer Ausführungsform kann in dem Speichermedium gespeicherte thermische Energie auf ein anderes Medium, vorzugsweise fluides Medium, übertragen werden und so das Speichermedium abgekühlt (entladen) werden, wobei das andere Medium oder auch Wärmetauschermedium insbesondere aus der Gruppe, bestehend aus Wasser,(-Dampf), Salzschmelzen, wie zum Beispiel ionische Flüssigkeiten, Thermoöl oder Gas ausgewählt ist.

Das Speichermedium kann beispielsweise wie ein Wärmetauscher von dem anderen Medium bzw. Wärmetauschermedium durchströmt werden. Eine entsprechende Gestaltung des Speichermediums als Wärmetauscher ist aufgrund der zumindest anfänglichen freien Formbarkeit des Speichermediums möglich. Dabei können beispielsweise meanderförmige Röhren für entsprechende fluide Medien in einem entsprechenden Speichermedium-Element / Speichermedium -Elementen vorgesehen sein. Andererseits können aber auch als geometrische Blöcke geformte Elemente des Speichermediums so angeordnet werden, dass ein entsprechendes Röhrensystem mit rechteckigem, polygonalem oder rundem Querschnitt entsteht. Alternativ könnten entsprechende Blöcke des Speichermediums auch überströmt bzw. von dem anderen Medium bzw. Wärmetauschermedium überstrichen werden, wenn dieses anderen Medium bzw. Wärmetauschermedium mit einer vorwählbaren Strömungsgeschwindigkeit über die Oberfläche(n) des Speichermediums hinwegströmt.

Die Regelung der Abkühlung (Entladung) des Speichermediums kann dabei beispielsweise über die Temperatur und Strömungsgeschwindigkeit des anderen Mediums bzw. Wärmetauschermediums erfolgen. Hierdurch kann eine Erwärmung und/oder Abkühlen des Speichermediums über bzw. unter einen vorbestimmten Schwellenwert vermieden werden.

Die Erzeugung von elektrischem Strom kann dabei beispielsweise mittels Dampfturbinen oder mittels Gasturbinen erfolgen, wobei in letzterem Fall das Speichermedium beispielsweise die Funktion der "Brennkammer" zur Erhitzung des Arbeitsgases übernehmen könnte. Dabei kann Luft als Arbeitsgas verwendet werden.

In einer Ausführungsform können das Speichermedium und eine Entladeeinrichtung integral oder als getrennte Elemente vorkommen. Hier sind beispielsweise Anlagen denkbar, bei denen Speichermedium-Elemente, Regelungseinrichtung und Stromerzeugungseinheit ein System bilden, welches beispielsweise im Bereich eines Hauses mit Solaranlage als eine geschlossene Einheit integriert und verbaut ist.

In einer Ausführungsform kann der Strom-Wärme-Speicher zum Transport von elektrischer Energie nach erfolgter Strom-Wärme-Kopplung benutzt werden ohne das Vorhandensein von Leitungssystemen. Hierzu könnten beispielsweise Speichermedium-Elemente mit geringer Masse, beispielsweise drei bis fünf Kilogramm, zur Verfügung gestellt werden, die dann in Wärmeisolationsboxen sicher und mit geringem Wärmeverlust über weite Strecken transportiert werden können. Am Zielort angekommen kann dann aus der Wärmeenergie wieder elektrische Energie gewonnen werden.

In einer Ausführungsform kann der Strom-Wärme-Speicher nach Wärme-Strom-Kopplung wieder elektrischen Strom erzeugen. Hierzu können Gas- oder Dampfturbinen aber auch thermoelektrische Generatoren, basierend auf dem thermoelektrischen oder Seeberg-Effekt, Verwendung finden.

In einer Ausführungsform kann der Strom-Wärme-Speicher zur Energieversorgung isolierter Energieverbraucher Einsatz finden.

In einer Ausführungsform können isolierte Energieverbraucher mit Wärmeenergie und elektrischer Energie versorgt werden. D.h., dass hier ein so genannter Inselbetrieb, unabhängig von einer elektrischen Netzanbindung, möglich ist.

In einer Ausführungsform kann der Strom-Wärme-Speicher zur Energieversorgung von Maschinen oder mobilen Einrichtungen wie Fahrzeugen Einsatz finden. Dies eignet sich beispielsweise für Fahrzeuge mit Gasturbinenantrieb, bei dem das Arbeitsmedium über ein Speichermedium-Element erhitzt werden kann.

Ein Wärmespeicher, der gleichzeitig be- und entladen werden kann, ist immer im Sinne einer Kraft-Wärme-Kraft-Kopplung ein Wärmekraftwerk, bestehend aus Stromerzeuger wie z. B. erneuerbare Energien (und damit $CO_2$-frei), Speicher, Turbine und Generator.

Ein Wärmespeicher dieser Art kann aber auch in idealer Form als Wärmeüberträger auf andere Systeme eingesetzt werden. In diesem Fall handelt es sich um eine Kraft-Wärme-Wärmekopplung z. B. im Bereich der Apparatetechnik. Die Beheizung z. B. von Kesseln, Drehrohröfen oder technischen Einrichtungen aller Art muss nicht mehr z. B. mit Dampf oder heißen Verbrennungsgasen erfolgen, es ist viel mehr möglich, die Speichersubstanz z. B. durch Kraft (Strom aus EE) aufzuheizen und durch direkten Kontakt auf z. B. Metall oder Keramiken oder andere Substanzen zu übertragen. Da der Wirkungsgrad der Kraft-Wärme-Kopplung bei 95 - 100 % liegt, ist die Beheizung von Systemen mit ähnlichen Wirkungsgraden möglich. Diese Vorteile werden zukünftig die Energiekosten deutlich absenken und die technischen Konstruktionen vereinfachen. Hierzu gehört z. B. die Beheizung von Gebäuden durch aufheizbare und das Speichermedium enthaltene Elemente.

Weitere Aufgaben und Vorteile von Ausführungsformen der vorliegenden Erfindung werden an Hand der folgenden detaillierten Beschreibung und der beigefügten Figuren ersichtlich.

Fig. 1 zeigt eine Partikelgrößenverteilung eines trockenen herkömmlichen Bauxitrückstands.

Fig. 2 zeigt den Dichteverlauf einer Versuchsprobe während des Erhitzens von Rotschlamm von 100 °C bis zu 1000 °C in einer Sauerstoff ($O_2$) bzw. in einer Stickstoff ($N_2$) Atmosphäre.

Fig. 3 zeigt eine Partikelgrößenverteilung eines bei 1000 °C getemperten Rotschlamms gemäß einer beispielhaften Ausführungsform der Erfindung.

Fig. 4 ist eine grafische Darstellung der in Tabelle 3 wiedergegebenen Messreihe zur spezifischen Wärmekapazität von ALFERROCK® gemäß einer beispielhaften Ausführungsform der Erfindung.

Im Folgenden werden weitere Details der vorliegenden Erfindung und weitere Ausführungsformen davon beschrieben. Die vorliegende Erfindung ist jedoch nicht auf die folgende detaillierte Beschreibung beschränkt, sondern sie dient lediglich der Veranschaulichung der erfindungsgemäßen Lehren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können. Insbesondere können Merkmale, die im Zusammenhang mit einer beispielhaften Ausführungsform eines erfindungsgemäßen modifizierten Rotschlamms beschrieben werden, mit jeder anderen beispielhaften Ausführungsform eines erfindungsgemäßen modifizierten Rotschlamms sowie mit jeder beispielhaften Ausführungsform eines Verfahrens zur Herstellung eines modifizierten Rotschlamms, eines Speichermedium, eines Wärmespeichers und von Verwendungen eines modifizierten Rotschlamms kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und "das", im Singular bezeichnet wird, schließt dies auch den Begriff im Plural mit ein und umgekehrt, sofern der Kontext nicht eindeutig anderes festlegt. Der Ausdruck "umfassen" oder "aufweisen", wie er hier verwendet wird, schließt nicht nur die Bedeutung von "enthalten" oder "beinhalten" ein, sondern kann auch "bestehen aus" und "im Wesentlichen bestehen aus" bedeuten.

Für die im Rahmen der vorliegenden Erfindung durchgeführten Untersuchungen wurde zunächst der zu untersuchende Stoff bei Zimmertemperatur charakterisiert, insbesondere wurden die chemische sowie die mineralogische Zusammensetzung bestimmt. Weiterhin wurde dieser Stoff langsam auf 1000° C erhitzt und dabei alle 100° C die mineralogischen Phasen sowie die Dichte und die spezifische Wärmekapazität bestimmt.

Die Charakterisierung des zu untersuchenden Stoffs:

## 1. Chemische Zusammensetzung (typisch für Bauxitrückstand)

- 10 bis 50 Gewichtsprozent Eisenverbindungen
- 12 bis 35 Gewichtsprozent Aluminiumverbindungen
- 5 bis 17 Gewichtsprozent Siliziumverbindungen
- 2 bis 10 Gewichtsprozent Titandioxid
- 0,5 bis 6 Gewichtsprozent Calciumverbindungen

## 2. Mineralogische Zusammensetzung

Im Ausgangszustand der Untersuchung wurden röntgenographisch folgende Mineralphasen ermittelt:

- Hämatit

- Goethit

- Anatas

- Rutil

- Perowskit

- Böhmit

- Gibbsit

- Cancrinit

- Quarz

### 3. Partikelgrößen

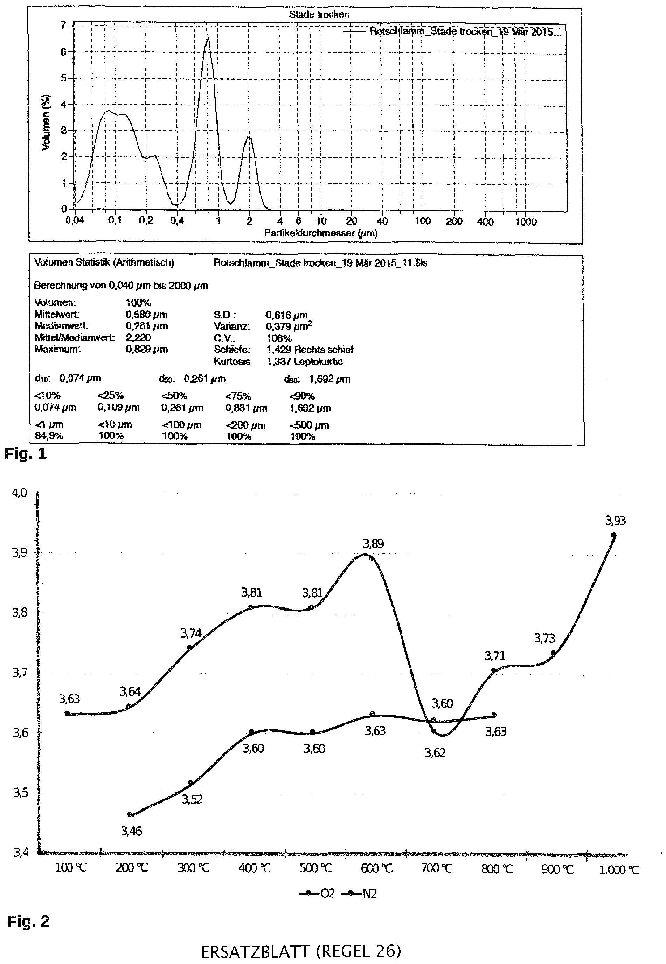

Die Partikeldurchmesser ($\mu$m) sind in Fig. 1 dargestellt. Danach ist die Substanz sehr fein und hat 3 Maxima. Bei guter Verteilung war zu erwarten, dass die Substanz eine hohe Dichte aufweist, da sich die sehr feinen Kristalle in Hohlräume der mittelfeinen Kristalle und diese in Hohlräume der gröberen Kristalle einfügen können. Die gemessene Dichte von 3,63 ($g/cm3$ ) bestätigt diese Einschätzung.

Durch Zusatz von thermisch stabilen und chemisch inerten Substanzen mit gewillkürter Korngrößenverteilung können noch vorhandene Hohlräume reduziert werden mit Auswirkung auf mechanische, elektrische und thermische Eigenschaften. Dies stellt eine weitere Optimierung des Speichermechanismus im Sinne der Erfindung dar.

### 4. Versuchsdurchführung

Proben der Versuchssubstanz wurden schrittweise unter Sauerstoff und unter Stickstoff bis auf 1.000° C erhitzt. Jeweils bei 100° C, 200 ° C, 300° C, 400° C, 500° C, 600° C, 700° C, 800° C, 900° C und 1000° C wurden Proben entnommen und die Veränderungen der mineralogischen Zusammensetzung sowie der Dichte ermittelt.

Die spezifische Wärmekapazität wurde im Temperaturbereich von Zimmertemperatur (30,26° C) bis 584,20° C gemessen.

### 5. Interpretation der Ergebnisse

#### 5.1. Mineralphasen

In Abhängigkeit von der Temperatur ändert sich die mineralogische Zusammensetzung der Substanz (s. nachfolgende Tabelle 1).

Bei ca. 300° C zersetzt sich Gibbsit, bei ca. 400° C zersetzt sich Goethit und bei ca. 500° C zerfällt Boehmit. Bei 573° C wandelt sich Alpha-Quarz in Beta-Quarz um. Oberhalb von 600° C erfolgt die $CO_2$-Abgabe von Cancrinit $Na_6Ca_2$ [(AlSiO$_4$)$_6$ (CO$_3$)$_2$]. Bei 600° C liegt ein erstes Maximum der Dichte vor. Die Substanz besteht hier wesentlich aus Hämatit ($Fe_2O_3$) und Korund ($Al_2O_3$) und in geringeren Anteilen aus $TiO_2$, Cancrinit und Perowskit.

Bei 1000° C wandeln sich Cancrinit und die beiden $TiO_2$-Phasen Anatas und Rutil in die Minerale Pseudobrookit [($Fe^{3+}$)$_2$Ti]O$_5$ und Nephelin [(Na,K)[AlSiO$_4$]] um.

Tabelle 1: Mineralphasen Bauxitrückstand (Schüttdichte 0.944 g/cm$^3$)

| T [°C] | Mineralphasen Bauxitrückstand | Dichte $\frac{g}{cm3}$ |
|---|---|---|
| | GEA | |
| 100 | Hämatit, Goethit, Anatas, Rutil, Perowskit,Böhmit, Gibbsit, Cancrinite, Quarz | 3.63 |
| 200 | Hämatit, Goethit, Anatas, Rutil, Perowskit,Böhmit, Gibbsit, Cancrinite, Quarz | 3.64 |
| 300 | Hämatit, Goethit, Anatas, Rutil, | 3.74 |

(fortgesetzt)

| T [°C] | Mineralphasen Bauxitrückstand | Dichte $\frac{g}{cm3}$ |
|---|---|---|
| | Perowskit,Böhmit, Cancrinite, Quarz, $\alpha$-$Al_2O_3$ | |
| 400 | Hämatit, Goethit, Anatas, Rutil, Perowskit,Böhmit, Cancrinite, Quarz, $\alpha$ -$Al_2O_3$ | 3.81 |
| 500 | Hämatit, Anatas, Rutil, Perowskit,Böhmit, Cancrinite, Quarz, $\alpha$ -$Al_2O_3$ | 3.81 |
| 600 | Hämatit, Anatas, Rutil, Perowskit, Cancrinite, Quarz, $\alpha$ -$Al_2O_3$ | 3.89 |
| 700 | Hämatit, Anatas, Rutil, Perowskit, Cancrinite, Quarz, $\alpha$ -$Al_2O_3$ | 3.60 |
| 800 | Hämatit, Anatas, Rutil, Perowskit, Cancrinite, Quarz, $\alpha$ -$Al_2O_3$ | 3.71 |
| 900 | Hämatit, Anatas, Rutil, Perowskit, Cancrinite, Quarz, $\alpha$ -$Al_2O_3$ | 3.73 |
| **1000** | Hämatit, Anatas, Rutil, Perowskit, Quarz, $\alpha$ - $Al_2O_3$, Nephelin, Pseudobrookit | 3.93 |

5.2. Dichte

Wie aus Fig. 2 ersichtlich ist, entwickelt sich die Dichte als Funktion der Temperatur von 3,63 (*g*/*cm3* ) bei 100°C auf 3,93 (*g*/*cm3* ) bei 1000° C. Die Zersetzung von Mineralphasen mit Abspaltung von Wasser und $CO_2$ sowie Sinterprozesse reduzieren die Dichte zwischen 600° C und 700° C, um dann bis 1.000° C wieder auf einen Wert von 3,93 (*g*/*cm3* ) anzusteigen.

Für Anwendungen im thermischen Bereich können nur Substanzen eingesetzt werden, die als Körper stabil sind und die in den jeweils gewillkürten Temperaturbereichen keine weiteren Gase wie $H_2O$ oder $CO_2$ abspalten und die auch keine weiteren Sinterprozesse erleiden. Oxide wie $Fe_2O_3$, $Al_2O_3$, $TiO_2$ oder $SiO_2$ verändern sich bei Temperaturerhöhungen kaum merklich. Eine wesentliche Eigenschaft offenbarte sich darin, dass die Dichte der bis 1.000° C erhitzten Substanz beim Abkühlen konstant blieb, z. B. finden Rehydratisierungen nicht statt.

5.3. Partikelgröße

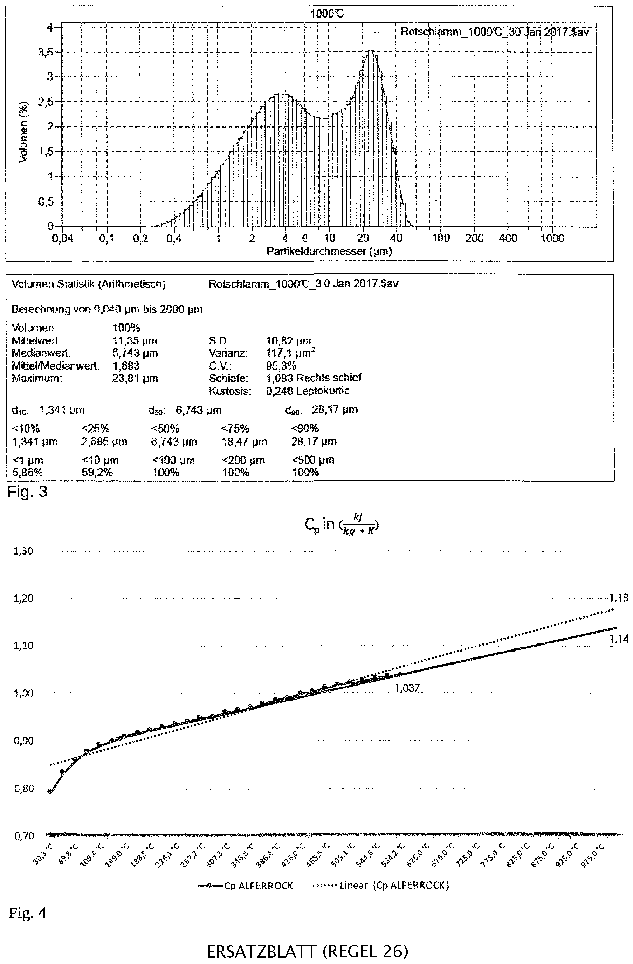

Das Tempern der erfindungsgemäßen Substanz bis zu Temperaturen von 1.000° C verschiebt die Partikeldurchmesser z. B. durch Zersetzung von Hydroxiden, Oxidhydraten oder Karbonaten und durch Sinterprozesse in deutlich höhere Werte (vergl. Fig. 3). So wachsen z. B.

- die $d_{10}$-Werte von 0,074 $\mu$m auf 1,341 $\mu$m
- die $d_{50}$-Werte von 0,261 $\mu$m auf 6,743 $\mu$m
- die $d_{90}$-Werte von 1,692 $\mu$m auf 28,17 $\mu$m.

5.4. Spezifische Wärmekapazität

Die spezifische Wärmekapazität von Substanzen ist eine Funktion der Temperatur. Mit steigender Temperatur steigt auch die spezifische Wärmekapazität. Die nachstehende Tabelle 2 zeigt entsprechende Beispiele.

Tabelle 2: Spezifische Wärmekapazität bei verschiedenen Temperaturen:

| | | **20° C** | **726,8° C** |
|---|---|---|---|
| **$Fe_2O_3$** | (*kJ*/(*kg* $\neq$ *K*)) | 0,650 | 0,944 |
| **$Al_2O_3$** | (*kJ*/(*kg* $\neq$ *K*)) | 0,775 | 1,223 |
| **$SiO_2$** | (*kJ*/(*kg* $\neq$ *K*)) | 0,732 | 1,148 |
| **$TiO_2$ Rutil** | (*kJ*/(*kg* $\neq$ *K*)) | 0,689 | 0,937 |

(fortgesetzt)

| | | 20° C | 726,8° C |
|---|---|---|---|
| **TiO$_2$ Anatas** | ($kJ/(kg \neq K)$) | 0,691 | 0,943 |

In Mischungen ist die spezifische Wärmekapazität die Summe der spezifischen Wärmekapazitäten der jeweiligen Bestandteile der Mischungen.

Die Charakterisierung der zur Verfügung gestellten Substanz zeigt eine Mischung aus verschiedenen mineralischen Substanzen. Beim Tempern zersetzen sich Teile der Substanzen, spalten z. B. Wasser oder $CO_2$ ab unter Bildung von Oxiden oder anderen chemisch stabilen mineralischen Phasen. Weiterhin finden Sinterprozesse statt.

Die Messergebnisse dieser Substanzen zeigen bei 30° C einen Wert von 0,791 ($kJ/(kg \neq K)$) und bei 584° C einen Wert von 1,037 $\left(\frac{kJ}{kg * K}\right)$ . Bei 1.000° C kann durch Extrapolation ein Wert von 1,14 - 1,18 $\left(\frac{kJ}{kg * K}\right)$ angenommen werden (vergl. Fig. 4).

Tabelle 3: Messreihe spezifische Wärmekapazität ALFERROCK®

| Temperatur der Probe [°C] | Wärmekapazität $c_p$ ALFERROCK® [( $kJ$)/(kg $\neq$ K)] |
|---|---|
| 30,3 °C | 0,791 |
| 50,1 °C | 0,832 |
| 69,8 °C | 0,858 |
| 89,6 °C | 0,877 |
| 109,4 °C | 0,89 |
| 129,2 °C | 0,898 |
| 149,0 °C | 0,907 |
| 168,8 °C | 0,915 |
| 188,5 °C | 0,922 |
| 208,3 °C | 0,928 |
| 228,1 °C | 0,935 |
| 247,9 °C | 0,94 |
| 267,7 °C | 0,948 |
| 287,5 °C | 0,95 |
| 307,3 °C | 0,96 |
| 327,0 °C | 0,963 |
| 346,8 °C | 0,969 |
| 366,6 °C | 0,977 |
| 386,4 °C | 0,985 |
| 406,2 °C | 0,989 |
| 426,0 °C | 0,999 |
| 445,7 °C | 1,002 |
| 465,5 °C | 1,01 |
| 485,3 °C | 1,017 |
| 505,1 °C | 1,02 |
| 524,9 °C | 1,026 |

(fortgesetzt)

| Temperatur der Probe [°C] | Wärmekapazität $c_p$ ALFERROCK® [( $kJ$)/($kg \neq K$)] |
|---|---|
| 544,6 °C | 1,031 |
| 564,2 °C | 1,035 |
| 584,2 °C | 1,037 |

Beim Abkühlen der auf 1.000° C erhitzten Substanz werden die $c_p$-Werte zurückgehen auf Werte, die den jeweiligen Temperaturen entsprechen. Da sich aber die Ausgangssubstanz durch Zersetzungen von Mineralphasen und der Bildung anderer Substanzen verändert hat und weiterhin Sinterprozesse stattgefunden haben, wird die Substanz nach der Abkühlung andere Werte der spezifischen Wärmekapazität haben als die Ausgangssubstanz. Es ist wichtig festzustellen, dass nach dem Tempern eine stabile Substanz zur Verfügung steht, die beliebig oft erhitzt und abgekühlt werden kann und die dabei keine weitere Veränderung der einzelnen Substanzen in der Mischung erfährt. Wie bereits erwähnt, gilt das auch für die Dichte.

5.5. Spezifische Wärmeleitfähigkeit

Die Wärmeleitfähigkeit eines Systems ist u. a. abhängig von Parametern wie Druck, Temperatur, mineralogische Zusammensetzung, Porosität, Dichte, etc.

Durch Erhitzen der zur Verfügung gestellten Substanz sind - wie dargestellt - alle thermisch instabilen Bestandteile zersetzt worden. Nach dem Tempern liegt eine Substanz vor, bestehend aus Korund ($Al_2O_3$), Hämatit ($Fe_2O_3$). Rutil und Anatas ($TiO_2$) sowie feuerfesten Substanzen wie Pseudobrookit $[(Fe^{3+})_2Ti]O_5$ oder Nephelin $[(Na, K)[AlSiO_4]$.

In folgender Tabelle 4 sind die Werte der Wärmeleitfähigkeit und Dichte derjenigen Substanzen aufgeführt, die die wichtigsten Bestandteile der getemperten Substanz darstellen.

Tabelle 4: Wärmeleitfähigkeit und Dichte der einzelnen Bestandteile

| | Wärmeleitfähigkeit | Dichte |
|---|---|---|
| **Anatas TiO$_2$** | 4,8 - 11,8 ($WJ(m \cdot k)$) | 3,89 ($g/cm3$) |
| **Rutil TiO$_2$** | 4,8 - 11,8 ($W J(m \cdot k)$) | 4,25 ($g/cm3$) |
| **Hämatit Fe$_2$O$_3$** | 6 ($W J(m \cdot k)$) | 5,26 ($g/cm3$) |
| **Korund Al$_2$O$_3$** | 3,0 - 35 ($W J(m \cdot k)$) | 3,99 ($g/cm3$) |
| **Quarz SiO$_2$** | **18,37** ($W J(m \cdot k)$) | 2,65 ($g/cm3$) |

Beim Temperprozess haben sich die erzeugten Substanzen in ihrem Partikeldurchmesser deutlich vergrößert und dabei die Oberfläche verkleinert. Damit erhöht sich auch innerhalb der Primärkristalle die Leitfähigkeit in Richtung auf Werte, die in Tabelle 4 angegeben sind. Grundsätzlich werden in Kristallmischungen die Phononen an den Kristallgrenzen reflektiert bei gleichzeitiger Verringerung der Wärmeleitfähigkeit, d. h. Kristallstrukturen und Wärmeleitfähigkeit einer Substanz stehen in kausalem Zusammenhang.

In der Substanzmischung ist noch Luft enthalten, die als schlechter Wärmeleiter die gemessene Wärmeleitfähigkeit herabsetzt. Um diesen Effekt zu vermeiden, bieten sich verschiedene Methoden an, dazu gehören z. B. Druckanwendung, d. h. Pressen der Substanz zu Festkörpern.

Weiterhin können Substanzen zugesetzt werden, die Lufteinschlüsse zwischen den Kristalliten oder auf der Oberfläche der Kristallite verhindern und damit die Herstellung fester Substanzblöcke ermöglichen.

Dazu gehören z. B.:

- Metallkolloide
- Metallpulver
- Graphit
- sinterfähige pyrolysierende Substanzen auf Si-Basis

Neben dem Zusatz der genannten Stoffe können zusätzlich Druck und Wärmeenergie Anwendung finden.

Entscheidend ist die Tatsache, gut Wärme leitende Substanzblöcke herstellen zu können. Für den Einsatz der nach dem Tempern erhaltenen Substanz als Wärmespeicher ist eine gute Wärmeleitfähigkeit, insbesondere die Vermeidung von Lufteinschlüssen, wesentlich für den Beladevorgang (Aufheizen der Substanz) und für den Entladevorgang (Übertragung der gespeicherten Wärme auf Systeme, die z. B. Dampf erzeugen).

Beispiel:

Ein Gemisch der zur Verfügung gestellten Substanz aus nicht getemperter und bis 1.000° C getemperter Substanz im Verhältnis 1:1 wird mit 5% PDMS (Polydimethylsiloxan - Präpolymer) oberflächenmodifiziert und in einem BUSS-Kneter oder einem gleichläufigen Doppelschnecken - Extruder eingetragen. Die Compoundiermaschine hat eine Gehäusetemperatur von 135° C und maximale Vakuumentgasung. Das Drehmoment wird auf 65 - 85 % des Maximums eingestellt. Das Material wird über ein Kühlband abgenommen.

Das so entstandene Wasser- und luftfreie Produkt wird in den Isolationsbehälter eingebracht und mechanisch verdichtet. Danach wird langsam auf 1.000° C hochgeheizt und damit der Wärmespeicher betriebsbereit gemacht. Anstelle von PDMS können auch andere Substanzen wie Metallstäube, Graphit oder Salzlösungen verwendet werden.

## 6. Zusammenfassung

Als Ausgansstoff kommt nach Waschung oder Neutralisation weitgehend Alkali- und Erdalkalifreier Bauxit Residue/Rotschlamm zum Einsatz. Ziel ist es, einfache und klar definierte Substanzstrukturen mit klaren Parametern auch nach Tempern bis z. B. 1000° C oder höheren Temperaturen zu erhalten.

Beim Tempern bis zu Temperaturen von 1.000° C zersetzten sich alle Bestandteile innerhalb der Stoffmischung, die in diesem Temperaturintervall instabil sind. Dazu gehören Gibbsit, Goethit, Boehmit sowie Cancrinit und die $TiO_2$-Phasen, die ggf. bei 1.000° C Pseudobrookit $[(Fe^{3+})_2Ti]O_5$ und Nephelin $[(Na,K) (AlSiO_4)]$ bilden.

Nach dem Abkühlen lag zielgerecht eine Stoffmischung vor, bestehend aus Oxiden wie $Al_2O_3$, $Fe_2O_3$, $TiO_2$, $SiO_2$ und ggf. hochtemperaturfesten Stoffen wie Pseudobrookit und Nephelin, die beim erneuten Tempern bis 1.000° C keine weitere Veränderung zeigte.

Mit der genannten Veränderung der stofflichen Zusammensetzung hat sich auch die Dichte verändert von 3,63 (*g/cm*3 ) bei Zimmertemperatur bis auf 3,93 (*g/cm*3 ) bei 1.000° C. Dieser erwartete Vorgang wurde zusätzlich von Sintereffekten begleitet. Beim Abkühlen der bis 1.000° C getemperten Stoffmischung bleibt die bei 1.000° C erreichte Dichte unverändert, da Oxide wie $Al_2O_3$, $Fe_2O_3$ sowie $TiO_2$ und $SiO_2$ ihre Dichte in Temperaturbereichen zwischen 25° C und 1.000° C nicht verändern.

Diese Sintereffekte und die Zersetzung mineralischer Phasen hat in der Stoffmischung die Partikeldurchmesser in Richtung größerer Werte verschoben. Während vor dem Tempern z. B. $d_{50}$=0,261 μm und $d_{90}$=1,692 μm betrugen, konnten nach dem Tempern folgende Werte gemessen werden: $d_{50}$=6,743 μm und $d_{90}$=28,17 μm. Die Vergrößerung der Partikel bedeutet eine Verringerung der Oberfläche und eine bessere Wärmeleitfähigkeit. Der Luftgehalt (schlechter Wärmeleiter) zwischen den sehr kleinen Kristalliten wurde reduziert.

Die Untersuchung der spezifischen Wärmekapazität der charakterisierten Substanz zeigte einen Anstieg der spezifischen Wärmekapazität von 0,79 (*kJ/(kg K)* ) bei 25° C auf 1,037 (*kJ/(kg K)* ) bei 600° C. Bei 1.000° C ist durch Extrapolation ein Wert von 1,14 - 1,18 (*kJ/(kg K)* ) zu erwarten.

Da, wie schon dargelegt, auch die Dichte angestiegen ist, erreicht das Produkt aus Dichte und spezifischer Wärmekapazität als entscheidendes Kriterium für Anwendungen als Wärmespeicher Werte, die über dem von Wasser liegen. Wasser hat eine Dichte bei 20° C von 998,2 (*kg/m*3 ) und eine herausragende spezifische Wärmekapazität von 4,182 (*kJ/(kg K)* ). Damit ergibt sich eine volumetrische thermische Kapazität von 4175 (*kJ/(m3 K)* ). Die zur Verfügung gestellte Substanz hat dagegen eine Dichte von 3890 (*kg/m*3 ) und eine spezifische Wärmekapazität von 1,037 (*kJ/(kg K)* ) und damit eine volumetrische thermische Kapazität von 4.034 (*kJ/m3 K)* ) bei ca. 600° C. Bei 1000°C ergeben sich Werte für die Dichte von 3.930 (*kg/m*3 ) und ein $c_p$ von 1,16 (*kJ/(kg K)* ). Damit erreicht die volumetrische Wärmekapazität einen Wert von 4.559 (*kJ/(m3 K)* ). Dieser Wert übertrifft den Wert von Wasser deutlich.

Wesentlicher Unterschied zwischen Wasser und der spezifizierten Substanz ist die Temperatur, in der die Speichermedien arbeiten können. Während Wasser idealerweise in Temperaturbereichen zwischen 40° C und 90° C arbeitet, also ein ΔT von 50° C hat, kann die bereitgestellte Substanz im Temperaturbereich bis 1.000° C arbeiten, d. h. die Substanz kann Wasser ab einer Temperatur von 100° C verdampfen und somit mit einem ΔT von 900° C arbeiten. Aus diesem Grund kann die bereitgestellte Substanz die 15 - 20fache Wärmemenge speichern im Vergleich zu Wasser (volumenbezogen).

Die Wärmeleitzahl ist in Speichermedien von hoher Bedeutung für den Beladevorgang (Aufheizen des Speichers) wie für den Entladevorgang. Das Wärmeleitvermögen der in der Substanz wesentlich enthaltenen Oxide liegt zwischen 3 und 35 (*WJ(m K)* ). Entscheidend für Wärmespeicher ist die Notwendigkeit, die als Speichermedium eingesetzte Substanz zu festen Blöcken kompaktieren zu können, in denen der Fluss der thermischen Energie optimal erfolgen kann, d. h. vom Heizkörper in die Speichersubstanz, innerhalb der Speichersubstanz und von der Speichersubstanz in die Wärmeenergie abnehmenden Systeme. Insofern ist es vorteilhaft, wenn schlecht Wärme leitende Gase innerhalb der Substanz oder auf der Oberfläche der Substanz eliminiert werden. Neben Druckanwendungen können Substanzen zugesetzt werden, die die Primärkristalle "zusammenkleben". Dazu gehören z. B. Metallkolloide, Metallpulver, Graphit, sinterfähige pyrolysierende Sihaltige Stoffe. Entscheidend ist vor allem auch die Tatsache, dass im Temperprozess der zur Verfügung gestellten Substanz bis 1.000° C alle instabilen Substanzen zersetzt werden und so eine überwiegend oxidische, thermische stabile Speichersubstanz zur Verfügung steht, die beliebig oft aufgeheizt und abgekühlt werden kann, ohne dabei Gase wie $H_2O$ oder $CO_2$ zu erzeugen, die den Speicherblock zerstören können.

Be- und Entladung der Wärmespeicher finden gleichzeitig bei einer gewillkürten Temperatur bzw. engem Temperaturband statt. Dadurch wird eine permanente Veränderung des thermischen Ausdehnungskoeffizienten verhindert und das Thermoschockverhalten und das Thermozyklenverhalten stabilisiert im Sinne langer Lebenserwartung der Energiespeicher.

**Verwendung der zur Verfügung gestellten Substanz als Speichermaterial für Hochtemperatur-Wärmespeicher**

Das Speichersystem

Sowohl Wasser wie auch feste Substanzen - z.B. die bisher beschriebene Substanz - gehören zu den sensitiven Wärmespeichersystemen (sensitiv, weil die Wärme der Speichermasse fühlbar ist).

Die Wärmespeicher können über Kraft-Wärmekoppelung durch elektrische Energie aus Windparks oder Solaranlagen aufgeheizt werden. Bei Windstille oder bei Dunkelheit können diese Wärmespeicher z. B. Dampf erzeugen, der Turbinen antreibt, die wiederum über nachgeschaltete Generatoren elektrische Energie erzeugen (Wärme-Kraftkoppelung). Der Wärmespeicher übernimmt damit die Rolle von Notstromaggregaten oder im großen Stil von "Ersatzkraftwerken". Gelingt dieser Prozess, können auch die Stromleitungssysteme einfacher und effektiver konzipiert werden.

Die Anforderungen an Energiespeicher sind nachfolgend aufgeführt:

- Hohe Energiedichte
- Hohe Leistungsdichte
- Niedriger kumulierter Energieaufwand
- Geringe Verluste
- Geringe Selbstentladung
- Hohe Zyklenlebensdauer
- Hohe Lebensdauer
- Niedrige Investitionskosten
- Niedrige Betriebskosten

Die zur Verfügung gestellte Substanz erfüllt die gestellten Anforderungen in hohem Maße.

Die Substanz ist

- anorganisch
- ungefährlich
- langlebig
- recycelbar
- in sehr großen Mengen verfügbar
- hoch ökonomisch
- arbeitet im Temperaturbereich bis 1.000° C
- kann gleichzeitig beladen und entladen werden
- kann einfach konstruiert werden.

Insbesondere der Tatbestand, dass die zur Verfügung gestellte Substanz als sensitiver Hochtemperaturspeicher gleichzeitig beladen und entladen werden kann, erlaubt es, ein steuerbares, permanent laufendes Speicherkraftwerk zu betreiben. Damit können Energieerzeugungslücken ausgeglichen oder höhere Bedarfsanforderungen befriedigt werden.

Weiterhin können Wärmespeicher insbesondere für Windenergie-Parks oder Solar-Parks Anwendungen finden und damit die dort erzeugte Energie als "Paketlösung" grundlastfähig machen.

Weiterhin können kleine Wärmespeichereinheiten z. B. für eine komplette Energieversorgung von z. B. Wohnhäusern eingesetzt werden. Diese kleinen Einheiten werden beispielsweise durch erneuerbare Energien aufgeheizt und dann im regelmäßigen Austausch zur kompletten Enegieversorgung d. h. Wärmeenergie und Elektrizität für Wohnhäuser eingesetzt.

Weiterhin können kleine Wärmespeichereinheiten in Maschinen aller Art zum Zweck der Energieversorgung eingesetzt werden.

Weiterhin kann elektrische Energie nach Kraft-Wärme-Kopplung in Form von Wärmespeichern ohne Leitungssysteme "transportfähig" gemacht werden.

Auf diese Art und Weise können auch Fahrzeuge betrieben werden. Wärmespeicher, die regelmäßig wie Batterien ausgetauscht werden, können nach erfolgter Wärmekraftkopplung Elektromotoren betreiben, vergleichbar zu Lithiumbatterien.

Die Einrichtungen für die Umwandlung von Wärme in elektrische Energie können als integraler Bestandteil des Speichers erfolgen oder in davon unabhängigen Einheiten.

Beispiel

Die zur Verfügung gestellte Substanz ist ein Filterkuchen, der zunächst einer thermischen Behandlung unterzogen werden muss, d. h. langsam bis auf 1.000° C erhitzt werden muss. Dabei wird zunächst der Wassergehalt des Filterkuchens verdampft, im Anschluss werden bis 1.000° C alle Mineralien, die im Hochtemperaturbereich instabil sind, kalziniert. Die Substanz besteht dann nur noch aus Oxiden sowie stabilen anorganischen Phasen wie Nephelin oder andere. Diese Substanz wird abgekühlt und bildet die Speichermasse.

Das Beladen (d. h. Aufheizen) der Speichermasse erfolgt direkt über eingelagerte Widerstandsdrähte oder Heizkerzen, d. h. Widerstandsdrähte in Keramikhülsen oder andere Systeme. Über entsprechende Regeleinrichtungen kann die Speichermasse auf gewillkürte Temperaturen konstant eingestellt werden.

Das Entladen erfolgt über einen Wasserkreislauf, der an geeigneter und optimaler (Temperaturbereich / Dampfdruck) Stelle durch die Speichermasse führt. Wasser wird verdampft, Dampf treibt Turbinen an, Strom wird erzeugt. Der überschüssige Dampf wird über Kühleinrichtungen ("Kühlturm") wieder in den Wasserkreislauf zurückgeführt.

Zwischen der Wärmezuführung (heißeste Stelle) und der Wärmeabnahme können über die spezifische Wärmeleitung des Wärmespeichermediums optimale Verhältnisse eingestellt werden.

Die Wärmespeichermasse wird mit Heizeinrichtungen für die Wärmezulieferung und das Rohrleitungssystem (Wasser) für die Wärmeabführung zu einem Block verfestigt. Dieser Block wird nach außen thermisch isoliert.

Entscheidend ist die Aussage, dass das so charakterisierte Wärmespeichersystem gleichzeitig beladen und entladen werden kann. In der Regel sind Speicherwerke so ausgelegt, dass entweder beladen oder entladen wird; vgl. dazu Pumpspeicherwerke. Mit der Möglichkeit der gleichzeitigen Beladung durch erneuerbare Energien und der Entladung können dagegen stabile, grundlastfähige Speicherkraftwerke konstruiert werden.

Das aktuell wichtigste Wärmespeichersystem für sensitive Wärmespeicher ist Wasser. Dieses System ist dadurch gekennzeichnet, dass mit Wasser idealerweise in einem Temperaturintervall von 40° - 90° C gearbeitet wird, da Wasser über 100° C als Dampf vorliegt. Wasser hat also ein $\Delta T$ von 50° C.

Im Gegensatz dazu kann das Wärmespeichersystem, das mit einer Speichermasse arbeitet, die aus der zur Verfügung gestellten Substanz hergestellt worden ist, bis zu Temperaturen von 1.000° C arbeiten, d. h. die Substanz kann Wasser ab einer Temperatur von 100° C verdampfen und somit mit einem $\Delta T$ von 900° C arbeiten. Dieses System gehört also zu den Hochtemperaturspeichersystemen.

Beispiel:

Vergleich der sensitiven Wärmespeicher Wasser / ALFERROCK®

Berechnung der Wärmemenge, die gespeichert werden kann

Die Wärmemenge Q, die ein Speichermaterial speichern kann folgt folgender Gleichung:

$$Q = m * cp * \Delta\mathbf{T} = \rho * cp * V * \Delta\mathbf{T} \quad [\,J\,]$$

m = Masse [kg]

$c_p$ = spezifische Wärmekapazität $\left[\dfrac{kJ}{kg\ K}\right]$

$\rho$ = Dichte $\left[\dfrac{kg}{m^3}\right]$

V = Volumen [ m³ ]

$\rho * c_p$ = volumetrische thermische Kapazität $\left[\dfrac{kJ}{m3\,K}\right]$

$\Delta T$ = Temperaturintervall [ K ]

$Q_{(1m3)}$ = volumetrische thermische Kapazität * $\Delta T$ [J]

1. Wasser (für 1 m³)

$$\rho = 998,2\ \frac{kg}{m3}$$

$$c_p = 4,182\ \frac{kJ}{kg\,K}$$

$$\rho * c_p = 4.175\ \frac{kJ}{m3\,K}$$

$\Delta T$ = 50 K $\qquad Q = 4.175\ \dfrac{kJ}{m3\,K} * 50\ K * 1m^3 \qquad Q = 208,7 * 10^3\ kJ$

Umgerechnet in Wh:

$$1\ J = \frac{1\ Wh}{3600}$$

$Q_{Wasser}$ = 57, 88 kWh

2. ALFERROCK® (für 1 m³)

$$\rho = 3.930\ \frac{kg}{m3}$$

$$c_p = 1,16\ \frac{kJ}{kg\,K}$$

$$\rho * c_p = 4.558,8\ \frac{kJ}{m3\,K}$$

$\Delta T$ = 900 K

$$Q = 4.558,8\ \frac{kJ}{m3\,K} * 900\ K * 1m^3$$

$$Q = 4.102,9 * 10^3\ \frac{kJ}{m3}$$

Umgerechnet in Wh:

$$1\ J = \frac{1\ Wh}{3600}$$

$Q_{\text{ALFERROCK®}}$ = 1,1397 MWh

3. Vergleich ALFERROCK® / Wasser

$$\frac{Q\ ALFERROCK}{Q\ Wasser} = \frac{1,1397\ MWh}{57,88\ kWh} = 19,7$$

ALFERROCK® kann die 19,7-fache Wärmemenge bei einer Betriebstemperatur bis 1.000° C speichern.

Das ALFERROCK® Hochtemperatur - Wärmespeichermedium kann in hervorragender Weise auch als Wärmespeicher, Wärmetauscher und Wärmeregler bei niederen Temperaturen Einsatz finden. Bemerkenswert ist die Tatsache, dass beim Tempern der zur Verfügung gestellten Substanz der Anstieg der Dichte von 3,63 $\frac{g}{cm3}$ bei 100° C auf 3,93 $\frac{g}{cm3}$ bei 1.000° C nicht rückläufig ist, sondern als Konstante bei 3,93 $\frac{g}{cm3}$ verharrt. Die Größe p * $c_p$ wird damit um 9% angehoben.

In folgender Tabelle 5 sind die speicherbaren Wärmemengen im Bereich von ca. 200° C, 300° C, 400° C, 500° C und 600°C aufgeführt und zeigen durchaus attraktive Werte.

Tabelle 5: Anforderungen an Energiespeicher

| Temperatur [° C] | $c_p$ $\left[\frac{kJ}{kg\ K}\right]$ | Dichte p [$kg/m3$] | p*cp*V $\left[10^6 \frac{J}{K}\right]$ | ΔT [K] | Q (für 1 m³) [J] |
|---|---|---|---|---|---|
| 208,32 | 0,928 | 3930 | 3,65 | 100 | 365 * 10⁶ |
| 307,26 | 0,960 | 3930 | 3,77 | 200 | 754 * 10⁶ |
| 406,17 | 0,989 | 3930 | 3,88 | 300 | 1,16 * 10⁹ |
| 505,07 | 1,020 | 3930 | 4,01 | 400 | 1,60 * 10⁹ |
| 584,20 | 1,037 | 3930 | 4,08 | 500 | 2,04 * 10⁹ |

**Patentansprüche**

1. Modifizierter Rotschlamm, der folgende Komponenten enthält:

   - Hämatit
   - Korund
   - Rutil und/oder Anatas
   - Quarz
   - optional CaTiO3 Perowskit und
   - optional (Fe3+,Fe2+)2(Ti,Fe3+)O5 Pseudobrookit (Na,K)[AlSiO4] Nephelin und/oder (Na,Ca)4-8[Al6Si6O24(SO4)] Hauynit,

   wobei der modifizierte Rotschlamm weniger als 0,5 Gew.-% Na2O und weniger als 0,5 Gew.-% Glas enthält.

2. Modifizierter Rotschlamm nach Anspruch 1, enthaltend:

   - 48 bis 55 Gew.-% Hämatit
   - 13 bis 18 Gew.-% Korund
   - 8 bis 12 Gew.-% Rutil und/oder Anatas

- 2 bis 5 Gew.-% Quarz und
- weniger als 0,03 Gew.-% Na$_2$O und weniger als 0,1 Gew.-% Glas; und/oder

wobei der modifizierte Rotschlamm weniger als 0,5 Gew.-% Aluminiumtitanat , Eisen, Mayenit, Ulvospinell und/oder Andradit enthält.

3. Modifizierter Rotschlamm nach Anspruch 1 oder 2, erhältlich durch Erhitzen von gewaschenem Rotschlamm mit einer mineralischen Zusammensetzung von

    - 10 bis 55 Gewichtsprozent Eisenverbindungen,
    - 12 bis 35 Gewichtsprozent Aluminiumverbindungen,
    - 3 bis 17 Gewichtsprozent Siliziumverbindungen,
    - 2 bis 12 Gewichtsprozent Titandioxid,
    - 0,5 bis 6 Gewichtsprozent Calciumverbindungen
    - weniger als 0,5 Gew.-% Na$_2$O und
    - gegebenenfalls weitere unvermeidbare Verunreinigungen,

auf eine Temperatur von mindestens 800°C, vorzugsweise mindestens 1000 °C.

4. Modifizierter Rotschlamm nach einem der vorherigen Ansprüche,

wobei der modifizierte Rotschlamm eine Porosität von weniger als 15 %, insbesondere im Bereich von 5 bis 12 % hat; und/oder
wobei der modifizierte Rotschlamm eine Dichte im Bereich von 3,90 bis 4,0 g/cm$^3$, insbesondere von etwa 3,93 g/cm$^3$, hat; und/oder
wobei der modifizierte Rotschlamm eine mittlere Partikelgröße d50 im Bereich von 3 bis 10 $\mu$m, insbesondere von 5 bis 8 $\mu$m, hat; und/oder
wobei der modifizierte Rotschlamm eine Partikelgröße d10 im Bereich von 0,5 bis 2,5 um, insbesondere von 1,0 bis 2,0 $\mu$m, und/oder eine Partikelgröße d90 im Bereich von 15 bis 50 $\mu$m, insbesondere von 20 bis 40 $\mu$m, hat; und/oder
wobei der modifizierte Rotschlamm eine spezifische Wärmekapazität bei 20 °C im Bereich von 0,6 bis 0,8 kJ/(kg*K), insbesondere von 0,65 bis 0,75 kJ/(kg*K), und/oder eine spezifische Wärmekapazität bei 726,8 °C im Bereich von 0,9 bis 1,3 kJ/(kg*K), insbesondere von 0,95 bis 1,2 kJ/(kg*K), hat; und/oder
wobei der modifizierte Rotschlamm eine spezifische Wärmeleitfähigkeit im Bereich von 3 bis 35 W/(m*K), insbesondere von 5 bis 20 W/(m*K), insbesondere von 8 bis 12 W/(m*K), hat; und/oder
wobei der modifizierte Rotschlamm in Form eines verpressten Feststoffs vorliegt.

5. Verfahren zur Herstellung eines modifizierten Rotschlamms, insbesondere eines modifizierten Rotschlamms nach einem der vorherigen Ansprüche, umfassend die folgenden Schritte:

Waschen und Trocknen von Rotschlamm mit einer mineralischen Zusammensetzung von

    - 10 bis 55 Gewichtsprozent Eisenverbindungen,
    - 12 bis 35 Gewichtsprozent Aluminiumverbindungen,
    - 3 bis 17 Gewichtsprozent Siliziumverbindungen,
    - 2 bis 12 Gewichtsprozent Titandioxid,
    - 0,5 bis 6 Gewichtsprozent Calciumverbindungen und
    - gegebenenfalls weitere unvermeidbare Verunreinigungen,

so dass der gewaschene Rotschlamm weniger als 0,5 Gew.-% Na$_2$O enthält, und
anschließend Erhitzen des gewaschenen Rotschlamms auf eine Temperatur von mindestens 800°C, vorzugsweise mindestens 1000 °C oder 1150° C.

6. Verfahren zur Herstellung eines modifizierten Rotschlamms nach Anspruch 5,

wobei das Waschen des Rotschlamms mittels Eisen(II)chlorid-haltigem Wasser erfolgt; und/oder
wobei das Erhitzen des gewaschenen und getrockneten Rotschlamms in einer nicht-reduzierenden Atmosphäre durchgeführt wird; und/oder

ferner umfassend die folgenden Schritte:

Granulieren des Rotschlamms nach dem Erhitzen, und
anschließend Verpressen des Granulats.

7. Speichermedium, umfassend einen modifizierten Rotschlamm nach einem der Ansprüche 1 bis 4.

8. Speichermedium nach Anspruch 7,

ferner umfassend eine oder mehrere der folgenden Komponenten:

- ein Mittel zur Vermeidung von Lufteinschluss und Luftadsorption,
- ein Mittel zur Verbesserung der Wärmeleitfähigkeit, insbesondere ausgewählt aus der Gruppe, bestehend aus Metallkolloiden, Metallpulver, Graphit und Silicium-haltigen Substanzen,
- ein Mittel zur Bildung einer thixotropen Zusammensetzung; und/oder

wobei das Speichermedium im Wesentlichen frei von Weichmachern ist.

9. Wärmespeicher, umfassend ein Speichermedium nach Anspruch 7 oder 8.

10. Wärmespeicher nach Anspruch 9,

ferner umfassend Vorrichtungen zum Beladen und Entladen des Wärmespeichers; und/oder
ferner umfassend Mittel zum Umwandeln von Strom in Wärme bzw. von Wärme in Strom; und/oder
der zur Kraft-Wärme-Kopplung oder zur Kraft-Wärme-Kraft-Kopplung konfiguriert ist.

11. Verwendung eines modifizierten Rotschlamms nach einem der Ansprüche 1 bis 4 als ein Speichermedium, insbesondere in einem Wärmespeicher.

12. Verwendung nach Anspruch 11

zur Speicherung von Wärme bei einer Temperatur bis zu 1000 °C, insbesondere bei einer Temperatur von größer 100 °C bis zu 1000 °C; und/oder
als ein wiederholt aufheizbares und abkühlbares Speichermedium; und/oder
als ein gleichzeitig aufheizbares und abkühlbares Speichermedium; und/oder
wobei in dem Speichermedium gespeicherte thermische Energie auf ein anderes, vorzugsweise fluides Medium übertragen wird und so das Speichermedium abgekühlt wird, wobei das andere Medium insbesondere aus der Gruppe, bestehend aus Wasser, Dampf, Salzschmelzen, Thermoöl oder Gas ausgewählt ist; und/oder
wobei das Speichermedium und eine Entladeeinrichtung integral oder als getrennte Elemente vorkommen.

13. Verwendung nach Anspruch 11 oder 12 als ein Speichermedium in einem Strom-Wärme-Speicher, insbesondere wobei das Speichermedium mittels elektrischem Strom aufgeheizt wird und/oder unter Erzeugung von elektrischem Strom abgekühlt wird.

14. Verwendung nach einem der Ansprüche 11 bis 13 als Wärmeüberträger auf Heizungen in Gebäuden sowie technische Apparate aller Art.

15. Verwendung nach Anspruch 13 oder 14

zur Speicherung von aus erneuerbaren Energiequellen gewonnenem elektrischen Strom; und/oder
wobei der Strom-Wärme-Speicher Widerstandsdrähte umfasst, die durch elektrischen Strom aufgeheizt werden und so das Speichermedium aufheizen; und/oder
wobei der Strom-Wärme-Speicher zum Transport von elektrischer Energie nach erfolgter Strom-Wärme-Kopplung benutzt wird ohne Vorhandensein von Leitungssystemen; und/oder
wobei der Strom-Wärme-Speicher nach Wärme-Strom-Kopplung wieder elektrischen Strom erzeugt, insbesondere wobei isolierte Energieverbraucher mit Wärmeenergie und elektrischer Energie versorgt werden; und/oder
wobei der Strom-Wärme-Speicher zur Energieversorgung isolierter Energieverbraucher Einsatz findet; und/oder
wobei der Strom-Wärme-Speicher zur Energieversorgung von Maschinen oder mobilen Einrichtungen wie Fahrzeugen Einsatz findet.

**Claims**

1. Modified red mud containing the following components:

   - haematite
   - corundum
   - rutile and/or anatase
   - quartz
   - optionally CaTi03 perovskite, and
   - optionally (Fe3+,Fe2+)2(Ti,Fe3+)O5 pseudobrookite, (Na,K)[AlSiO4] nepheline and/or (Na,Ca)4-8[Al6Si6O24(SO4)] hauynite,

   wherein the modified red mud containing less than 0.5% by weight of Na20 and less than 0.5% by weight of glass.

2. Modified red mud according to claim 1,

   containing:

   - 48 to 55 wt% hematite
   - 13 to 18 wt.% corundum
   - 8 to 12 wt.% rutile and/or anatase
   - 2 to 5 wt.% quartz, and
   - less than 0.03 wt.% Na20 and less than 0.1 wt.% glass; and/or

   wherein the modified red mud contains less than 0.5% by weight of aluminium titanate, iron, mayenite, ulvospinell and/or andradite.

3. Modified red mud according to claim 1 or 2, obtainable by heating washed red mud with a mineral composition of

   - 10 to 55% by weight of iron compounds
   - 12 to 35% by weight of aluminium compounds,
   - 3 to 17% by weight of silicon compounds,
   - 2 to 12% by weight titanium dioxide,
   - 0.5 to 6% by weight of calcium compounds
   - less than 0.5% by weight of Na20, and
   - optionally other unavoidable impurities, to a temperature of at least 800°C, preferably at least 1000°C.

4. Modified red mud according to any one of the preceding claims,

   wherein the modified red mud has a porosity of less than 15%, in particular in the range of 5 to 12%; and/or
   wherein the modified red mud has a density in the range of 3.90 to 4.0 g/cm3, in particular about 3.93 g/cm3; and/or
   wherein the modified red mud has a mean particle size d50 in the range of from 3 to 10 $\mu$m, in particular from 5 to 8 $\mu$m; and/or
   wherein the modified red mud has a particle size d10 in the range of from 0.5 to 2.5 $\mu$m, in particular from 1.0 to 2.0 $\mu$m, and/or a particle size d90 in the range of from 15 to 50 $\mu$m, in particular from 20 to 40 $\mu$m; and/or
   wherein the modified red mud has a specific heat capacity at 20 °C in the range of from 0.6 to 0.8 kJ/(kg*K), in particular from 0.65 to 0.75 kJ/(kg*K), and/or a specific heat capacity at 726.8 °C in the range of from 0.9 to 1.3 kJ/(kg*K), in particular from 0.95 to 1.2 kJ/(kg*K); and/or
   wherein the modified red mud has a specific thermal conductivity in the range of from 3 to 35 W/(m*K), in particular from 5 to 20 W/(m*K), in particular from 8 to 12 W/(m*K); and/or
   wherein the modified red mud is present in the form of a compressed solid.

5. Method for producing a modified red mud, in particular a modified red mud according to any one of the preceding claims, comprising the steps of:

EP 3 589 600 B1

Washing and drying red mud with a mineral composition of

- 10 to 55% by weight of iron compounds
- 12 to 35% by weight of aluminium compounds,
- 3 to 17 weight percent silicon compounds,
- 2 to 12% by weight of titanium dioxide,
- 0.5 to 6% by weight of calcium compounds, and
- optionally other unavoidable impurities,

so that the washed red mud contains less than 0.5% by weight of Na20, and
subsequently heating the washed red mud to a temperature of at least 800°C, preferably at least 1000°C or 1150°C.

6. Method for producing a modified red mud according to claim 5,

wherein the washing of the red mud is carried out by means of water containing iron (II) chloride; and/or
wherein said heating of said washed and dried red mud is carried out in a nonreducing atmosphere; and/or
further comprising the steps of:

granulating the red mud after heating, and
subsequently compressing the granules.

7. Storage medium comprising a modified red mud according to any one of claims 1 to 4.

8. Storage medium according to claim 7,

further comprising one or more of the following components:

- an agent for preventing air entrapment and air adsorption,
- an agent for improving thermal conductivity, in particular selected from the group consisting of metal colloids, metal powder, graphite and silicon-containing substances,
- an agent for forming a thixotropic composition; and/or

wherein the storage medium is substantially free of plasticizers.

9. Heat storage comprising a storage medium according to claim 7 or 8.

10. Heat storage according to claim 9,

further comprising means for loading and unloading the heat storage medium; and/or
further comprising means for converting electricity into heat or heat into electricity; and/or
configured for cogeneration or combined heat and power.

11. Use of a modified red mud according to any one of claims 1 to 4 as a storage medium, in particular in a heat storage.

12. Use according to claim 11

for storing heat at a temperature of up to 1000°C, in particular at a temperature of greater than 100°C up to 1000°C; and/or
as a storage medium which can be repeatedly heated and cooled; and/or
as a storage medium which can be heated and cooled simultaneously; and/or
wherein thermal energy stored in the storage medium is transferred to another, preferably fluid medium and thus the storage medium is cooled, wherein the other medium is selected in particular from the group consisting of water, steam, molten salts, thermal oil or gas; and/or
wherein the storage medium and a discharge means are integral or separate elements.

13. Use according to claim 11 or 12 as a storage medium in a current-heat storage, in particular wherein the storage medium is heated by means of electric current and/or is cooled under generation of electric current.

22

14. Use according to any one of claims 11 to 13 as a heat transfer medium on heating systems in buildings and technical apparatus of all kinds .

15. Use according to claim 13 or 14

   for storing electric current generated from renewable energy sources; and/or
   wherein the current-heat storage comprises resistance wires which are heated by electric current and thus heat the storage medium; and/or
   wherein thecurrent-heat storage is used to transport electrical energy after current-heat cogeneration has occurred without the presence of conduction systems; and/or
   wherein the current-heat storage generates electrical current again after heat-current coupling, in particular wherein isolated energy consumers are supplied with heat energy and electrical energy; and/or
   wherein the current-heat storage is used to supply isolated energy consumers with energy; and/or
   wherein the current-heat storage is used to supply energy to machines or mobile equipment such as vehicles.

**Revendications**

1. Boue rouge modifiée contenant les composants suivants :

   - hématite ;
   - corindon ;
   - rutile et/ou anatase ;
   - quartz ;
   - éventuellement de la pérovskite $CaTiO_3$ ; et
   - éventuellement de la pseudobrookite ($(Fe^{3+}, Fe^{2+})_2(Ti, Fe^{3+})O_5$), de la néphéline $(Na, K)[AlSiO_4]$ et/ou de la haüyne $(Na, Ca)_{4-8}[Al_6Si_6O_{24}(SO_4)]$,

   où la boue rouge modifiée contient moins de 0,5% en poids de $Na_2O$ et/ou moins de 0,5% en poids de verre.

2. Boue rouge modifiée selon la revendication 1, contenant :

   - 48 à 55% en poids d'hématite ;
   - 13 à 18 % en poids de corindon ;
   - 8 à 12 % en poids de rutile et/ou d'anatase ;
   - de 2 à 5% en poids de quartz ; et
   - moins de 0,03 % en poids de $Na_2O$ et moins de 0,1 % en poids de verre ;

   et/ou
   dans laquelle la boue rouge modifiée contient moins de 0,5 % en poids de titanate d'aluminium, de fer, de mayénite, d'ulvöspinelle et/ou d'andradite.

3. Boue rouge modifiée selon la revendication 1 ou 2, pouvant être obtenue en chauffant une boue rouge lavée ayant une composition minérale de :

   - 10 à 55 % en poids de composés de fer ;
   - 12 à 35 % en poids de composés d'aluminium ;
   - 3 à 17 % en poids de composés de silicium ;
   - 2 à 12 % en poids de dioxyde de titane ;
   - 0,5 à 6 % en poids de composés de calcium ;
   - moins de 0,5 % en poids de $Na_2O$, et
   - éventuellement d'autres impuretés inévitables,

   à une température d'au moins 800°C, de préférence d'au moins 1000°C.

4. Boue rouge modifiée selon l'une quelconque des revendications précédentes,

   dans laquelle la boue rouge modifiée a une porosité inférieure à 15%, en particulier dans la gamme de 5 à 12% ; et/ou

dans laquelle la boue rouge modifiée a une densité comprise entre 3,90 et 4,0 g/cm3, en particulier d'environ 3,93 g/cm3 ; et/ou

dans laquelle la boue rouge modifiée a une taille de particule moyenne d50 dans la gamme de 3 à 10 $\mu$m, en particulier de 5 à 8 $\mu$m ; et/ou

dans laquelle la boue rouge modifiée a une taille de particule d10 dans la gamme de 0,5 à 2,5 $\mu$m, en particulier de 1,0 à 2,0 $\mu$m, et/ou une taille de particule d90 dans la gamme de 15 à 50 $\mu$m, en particulier de 20 à 40 $\mu$m ; et/ou

dans laquelle la boue rouge modifiée a une capacité thermique spécifique à 20 °C dans la gamme de 0,6 à 0,8 kJ/(kg*K), en particulier de 0,65 à 0,75 kJ/(kg*K), et/ou une capacité thermique spécifique à 726,8 °C dans la gamme de 0,9 à 1,3 kJ/(kg*K), en particulier de 0,95 à 1,2 kJ/(kg*K) ; et/ou

dans laquelle la boue rouge modifiée a une conductivité thermique spécifique dans la gamme de 3 à 35 W/(m*K), en particulier de 5 à 20 W/(m*K), en particulier de 8 à 12 W/(m*K) ; et/ou

dans laquelle la boue rouge modifiée se présente sous la forme d'un solide comprimé.

5. Procédé de production d'une boue rouge modifiée, notamment d'une boue rouge modifiée selon l'une quelconque des revendications précédentes, comprenant les étapes suivantes :

Lavage et séchage de boue rouge ayant une composition minérale de

- 10 à 55 % en poids de composés de fer ;
- 12 à 35 % en poids de composés d'aluminium ;
- 3 à 17 % en poids de composés de silicium ;
- 2 à 12 % en poids de dioxyde de titane ;
- 0,5 à 6 % en poids de composés de calcium ; et
- éventuellement d'autres impuretés inévitables ;

de manière à ce que la boue rouge lavée contienne moins de 0,5 % en poids de Na2O, et

Chauffage consécutif de la boue rouge lavée à une température d'au moins 800°C, de préférence d'au moins 1000°C ou 1150°C.

6. Procédé de production d'une boue rouge modifiée selon la revendication 5,

dans lequel le lavage de la boue rouge est effectué au moyen d'eau contenant du chlorure de fer (II) ; et/ou

dans lequel ledit chauffage de ladite boue rouge lavée et séchée est effectué dans une atmosphère non réductrice ; et/ou

comprenant en outre les étapes suivantes :

la granulation de la boue rouge après le chauffage ; et
la compression consécutive des granulés.

7. Support de stockage comprenant une boue rouge modifiée selon l'une quelconque des revendications 1 à 4.

8. Support de stockage selon la revendication 7, comprenant en outre un ou plusieurs des éléments suivants :

- un agent destiné à empêcher le piégeage et l'adsorption de l'air ;
- un agent destiné à améliorer la conductivité thermique, en particulier choisi dans le groupe constitué par des colloïdes métalliques, la poudre métallique, le graphite et des substances contenant du silicium ;
- un agent destiné à former une composition thixotrope ; et/ou dans lequel le support de stockage est sensiblement exempt de plastifiants.

9. Accumulateur de chaleur comprenant un support de stockage selon la revendication 7 ou 8.

10. Accumulateur de chaleur selon la revendication 9,

comprenant en outre des dispositifs pour charger et décharger l'accumulateur de chaleur ; et/ou
comprenant en outre des moyens pour convertir l'électricité en chaleur ou la chaleur en électricité ; et/ou
qui est configuré pour la production combinée de chaleur et d'électricité ou pour la cogénération de chaleur et d'électricité.

**11.** Utilisation d'une boue rouge modifiée selon l'une quelconque des revendications 1 à 4 comme support de stockage, notamment dans un accumulateur de chaleur.

**12.** Utilisation selon la revendication 11

pour stocker la chaleur à une température allant jusqu'à 1000°C, en particulier à une température supérieure à 100°C jusqu'à 1000°C ; et/ou
en tant que support de stockage pouvant être chauffé et refroidi de manière répétée ; et/ou
en tant que support de stockage pouvant être chauffé et refroidi simultanément ; et/ou
dans laquelle l'énergie thermique stockée dans le support de stockage est transférée à un autre milieu, de préférence un milieu fluide, le support de stockage étant ainsi refroidi, où l'autre milieu est choisi en particulier dans le groupe constitué par l'eau, la vapeur, les sels fondus, l'huile thermique ou le gaz ; et/ou
dans laquelle le support de stockage et un dispositif de décharge sont des éléments intégrés ou séparés.

**13.** Utilisation selon la revendication 11 ou 12 comme support de stockage dans un système de stockage de courant-chaleur, en particulier dans laquelle le support de stockage est chauffé au moyen d'un courant électrique et/ou est refroidi au moyen de la génération d'un courant électrique.

**14.** Utilisation selon l'une quelconque des revendications 11 à 13 en tant que caloporteur sur des systèmes de chauffage dans des bâtiments ainsi que dans des appareils techniques de toute nature.

**15.** Utilisation selon la revendication 13 ou 14

pour le stockage du courant électrique produit à partir de sources d'énergie renouvelables ; et/ou
dans laquelle le système de stockage de courant-chaleur comprend des fils résistifs qui sont chauffés par un courant électrique et chauffent ainsi le support de stockage ; et/ou
dans laquelle le système de stockage de courant-chaleur est utilisé pour transporter l'énergie électrique après que le couplage électricité/chaleur s'est produit sans présence de systèmes de conduction ; et/ou
dans laquelle le système de stockage de courant-chaleur génère à nouveau du courant électrique après le couplage chaleur/électricité, en particulier dans laquelle des consommateurs d'énergie isolés sont alimentés en énergie thermique et en énergie électrique ; et/ou
dans laquelle le système de stockage de courant-chaleur trouve application pour alimenter en énergie des consommateurs d'énergie isolés ; et/ou
dans laquelle le système de stockage de courant-chaleur trouve application pour fournir de l'énergie à des machines ou des équipements mobiles tels que des véhicules.

## Stade trocken

Rotschlamm_Stade trocken_19 Mär 2015...

**Volumen Statistik (Arithmetisch)**     Rotschlamm_Stade trocken_19 Mär 2015_11.$ls

Berechnung von 0,040 µm bis 2000 µm

| Volumen: | 100% | | |
|---|---|---|---|
| Mittelwert: | 0,580 µm | S.D.: | 0,616 µm |
| Medianwert: | 0,261 µm | Varianz: | 0,379 µm² |
| Mittel/Medianwert: | 2,220 | C.V.: | 106% |
| Maximum: | 0,829 µm | Schiefe: | 1,429 Rechts schief |
| | | Kurtosis: | 1,337 Leptokurtic |

$d_{10}$: 0,074 µm     $d_{50}$: 0,261 µm     $d_{90}$: 1,692 µm

| <10% | <25% | <50% | <75% | <90% |
|---|---|---|---|---|
| 0,074 µm | 0,109 µm | 0,261 µm | 0,831 µm | 1,692 µm |

| <1 µm | <10 µm | <100 µm | <200 µm | <500 µm |
|---|---|---|---|---|
| 84,9% | 100% | 100% | 100% | 100% |

**Fig. 1**

**Fig. 2**

ERSATZBLATT (REGEL 26)

Fig. 3

$$C_p \ in \ (\frac{kJ}{kg * K})$$

Fig. 4

ERSATZBLATT (REGEL 26)

**EP 3 589 600 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012126487 A1
- WO 2014114283 A1
- WO 2005061408 A1